# EUROPEAN PATENT SPECIFICATION

(11) **EP 3 203 693 B1**
(45) Date of publication and mention of the grant of the patent: **15.07.2020**
(21) Application number: 15852689.7
(22) Date of filing: 11.05.2015
(51) Int. Cl.: H04L 12/721, H04L 29/08, H04L 29/06

(54) **USER MESSAGE FORWARDING CONTROL METHOD AND PROCESSING NODE**
VERFAHREN ZUR STEUERUNG VON BENUTZERNACHRICHTENWEITERLEITUNG UND VERARBEITUNGSKNOTEN
NOEUD DE TRAITEMENT ET PROCÉDÉ DE COMMANDE DE TRANSFERT DE MESSAGE D'UTILISATEUR

(30) Priority: 22.10.2014 CN 201410567529
(43) Date of publication of application: 09.08.2017
(73) Proprietor: Huawei Technologies Co., Ltd., Longgang District Shenzhen, Guangdong 518129 (CN)
(72) Inventor: LIU, Meisheng, Shenzhen Guangdong 518129 (CN); JIANG, Ming, Shenzhen Guangdong 518129 (CN); ZHANG, Jidong, Shenzhen Guangdong 518129 (CN)
(74) Representative: Gill Jennings & Every LLP
(86) International application number: PCT/CN2015/078652
(87) International publication number: WO 2016/062067

(56) References cited:
- CN-A- 102 783 099
- CN-A- 103 931 162
- CN-A- 104 363 171
- US-A1- 2005 289 244
- US-A1- 2013 329 734
- US-A1- 2014 269 513
- US-A1- 2014 269 724

## Description

### TECHNICAL FIELD

The present invention relates to the field of communications technologies, and in particular, to a user packet forwarding control method and a processing node.

### BACKGROUND

A VAS (Value-Added Server, value-added server) provides various value-added services, for example, web optimization, video optimization, URL filtering, charging, security, and video acceleration.

To improve a capability of intelligent channel operation, an operator ensures service flow bearer resources and provides a charging policy to users, so that the operator can really implement a more precise service control and charging manner based on service and user classification, so as to properly utilize network resources and maximize profits. Usually, a control policy is configured for a PCRF (Policy and Charging Rules Function, policy and charging rules function), and a policy chain is delivered to a PCEF (Policy and Charging Enforcement Function, policy and charging enforcement function). The PCEF receives a user packet, and finds a policy chain (that is, a service chain) corresponding to a user. The service chain is a VAS chain. There may be multiple VASs on one service chain, and the service chain further indicates an order in which the user packet sequentially passes through the VASs. For example, a VAS chain indicated by SCID=1 is VAS1-VAS2-VAS3, that is, the user packet first passes through a VAS1, then passes through a VAS2, and finally, passes through a VAS3. For another example, a VAS chain indicated by SCID=2 is VAS3-VAS1-VAS2, and a VAS chain indicated by SCID=3 is VAS2-VAS1.

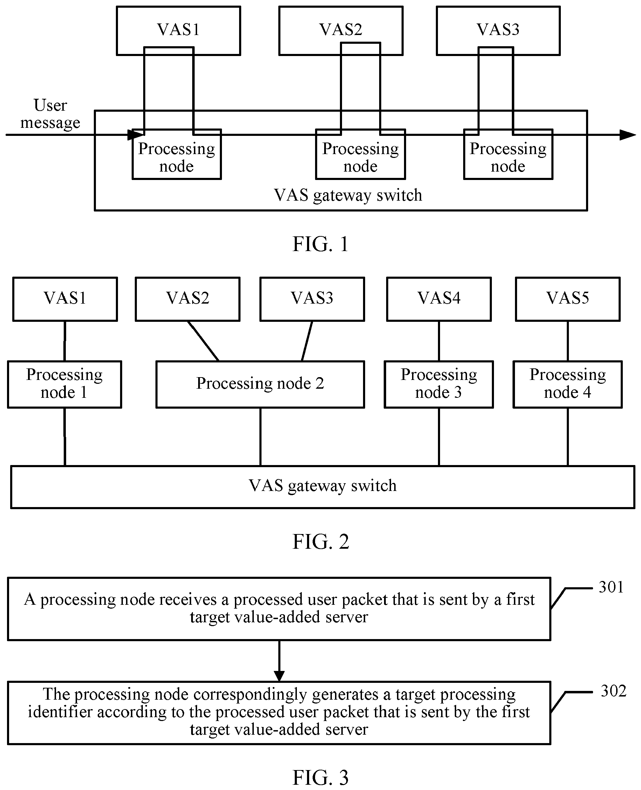

Generally, a VAS is a server having a specified value-added service processing capability, and does not have an exchange function or a routing function. An exchange between VASs is implemented by a switch with layer-2 Ethernet switching or layer-3 IP routing. The switch with layer-2 Ethernet switching or layer-3 IP routing is a VAS gateway switch, as shown in FIG. 1.

When one service chain involves multiple VASs, different VASs may cross different switched gateways or cross multiple processing nodes within one switched gateway. To implement the VAS exchange, the PCEF brings an SCID (service chain identifier) to the VAS gateway switch. The VAS gateway switch finds, according to the SCID, a connection port corresponding to a VAS, and sends a user packet to the corresponding VAS. After processing, the VAS returns the message to the VAS gateway switch. Subsequently, the VAS gateway switch finds, also according to the SCID, a next-hop VAS. If the next-hop VAS is on another switching node or another Ethernet VAS gateway switch, when the user packet is exchanged, the SCID (service chain identifier) needs to be placed in a tunnel header and brought to a next-hop switching processing node, so that when the next-hop switching processing node receives the message, the next-hop switching processing node finds, according to the SCID, a VAS to which the message is to be sent. The PCEF and the VAS gateway switch are both logical concepts only. In terms of specific physical devices, the PCEF and the VAS gateway switch may be implemented by one device or multiple devices.

An existing technology implementation mechanism is as follows: In a VAS exchange process, a VAS gateway switch transmits only a service chain ID, and obtains a path according to the service chain ID, to implement exchanges between VASs.

A specific application scenario is used as an example below to describe the VAS exchange process in the prior art.

As shown in FIG. 2, a VAS chain corresponding to a control policy chain service chain=1 configured by a PCRF is: VAS1-VAS2-VAS4-VAS3-VAS5. Different processing nodes implement internal communication between each other by using a VAS gateway switch.

After receiving a message of a policy chain service chain=1, the VAS gateway switch sends a user packet to a processing node 1 according to a chain path. When the user packet passes through the processing node 1 for the first time, the processing node 1 determines, according to a policy chain, to send the user packet to a VAS 1. The VAS 1 sends the processed user packet to the processing node 1. The processing node 1 sends the user packet to the VAS gateway switch. The VAS gateway switch determines, according to the policy chain, that a next-hop VAS is a VAS2. The VAS gateway switch sends the user packet to a processing node 2. When the user packet passes through the processing node 2 for the first time, the processing node 2 sends the user packet to the VAS2. The VAS2 sends the processed user packet to the processing node 2. The processing node 2 sends the user packet to the VAS gateway switch. The VAS gateway switch sends the user packet to a processing node 3. When the user packet passes through the processing node 3 for the first time, the user packet needs to be sent to a VAS4. The VAS4 sends the processed user packet to the processing node 3. The processing node 3 sends the user packet to the VAS gateway switch. The VAS gateway switch determines, according to the policy chain, that a next-hop VAS is a VAS3, and the VAS gateway switch sends the user packet to the processing node 2. When the user packet passes through the processing node 2 for the second time, because two VASs (the VAS2 and the VAS3) are connected to the processing node 2, but the processing node 2 has only service chain ID information but has no hop count, when the user packet passes through the processing node 2 for the second time, the processing node 2 cannot determine a previous-hop VAS and a VAS to which the user packet is to be sent a current time. A next-hop processing node cannot be determined by using only the service chain ID. As a result, an exception occurs in the user packet in the exchange process.

If an exchange exception occurs in the exchange process, a loopback constantly occurs between VASs, and it cannot be determined, by using only the service chain ID, whether a loopback occurs. As a result, the VASs cannot normally provide various value-added services.

US 20140269513 relates to method and apparatus for controlling service transmission.

### SUMMARY

Embodiments of the present invention provide a user packet forwarding control method and a processing node.

In particular, the present disclosure provides a user packet forwarding control method according to claim 1 and a processing node according to claim 5. Further technical features are defined in the respective dependent claims.

This embodiment provides a user packet forwarding control method and a processing node. In the forwarding control method shown in embodiments of the present invention, a processing node receives a processed user packet that is sent by the first target value-added server, and the processing node correspondingly generates a target processing identifier according to the processed user packet that is sent by the first target value-added server, so that the processing node determines, according to the target processing identifier, that the user packet has been processed by the first target value-added server. By means of the user packet forwarding control method provided in this embodiment, when different VASs forward a user packet, each processing node can determine VASs that have processed the user packet, without the need to change the original user packet, thereby effectively ensuring that each VAS provides a normal value-added service to the user packet, and avoiding a fault in a process of forwarding the user packet between value-added servers.

### BRIEF DESCRIPTION OF DRAWINGS

FIG. 1 is a schematic structural diagram of a system for implementing VAS switching in the prior art;
FIG. 2 is a schematic structural diagram of another system for implementing VAS switching in the prior art;
FIG. 3 is a flowchart of steps of an example of an embodiment of a user packet forwarding control method according to an embodiment of the present invention;
FIG. 4 is a flowchart of steps of another example of an embodiment of a user packet forwarding control method according to an embodiment of the present invention;
FIG. 5 is a flowchart of steps of another example of an embodiment of a user packet forwarding control method according to an embodiment of the present invention;
FIG. 6 is a flowchart of steps of another example of an embodiment of a user packet forwarding control method according to an embodiment of the present invention;
FIG. 7 is a flowchart of steps of another example of an embodiment of a user packet forwarding control method according to an embodiment of the present invention;
FIG. 8 is a flowchart of steps of another example of an embodiment of a user packet forwarding control method according to an embodiment of the present invention;
FIG. 9 is a flowchart of steps of another example of an embodiment of a user packet forwarding control method according to an embodiment of the present invention;
FIG. 10 is a schematic structural diagram of an example of an embodiment of a processing node according to an embodiment of the present invention;
FIG. 11 is a schematic structural diagram of another example of an embodiment of a processing node according to an embodiment of the present invention;
FIG. 12 is a schematic structural diagram of another example of an embodiment of a processing node according to an embodiment of the present invention;
FIG. 13 is a schematic structural diagram of another example of an embodiment of a processing node according to an embodiment of the present invention;
FIG. 14 is a schematic structural diagram of another example of an embodiment of a processing node according to an embodiment of the present invention;
FIG. 15 is a schematic structural diagram of another example of an embodiment of a processing node according to an embodiment of the present invention;
FIG. 16 is a schematic structural diagram of another example of an embodiment of a processing node according to an embodiment of the present invention; and
FIG. 17 is a schematic structural diagram of another example of an embodiment of a processing node according to an embodiment of the present invention.

### DESCRIPTION OF EMBODIMENTS

The following describes in detail a user packet forwarding control method according to an embodiment of the present invention with reference to FIG. 3.

301. A processing node receives a processed user packet that is sent by a first target value-added server.

In this embodiment, the processing node is connected to and provided with at least one value-added server VAS. The processing node is configured to forward the user packet between the value-added servers VASs.

Specifically, the first target value-added server is a value-added server that has processed the user packet, and the first target value-added server is connected to the processing node.

A specific device for implementing a function of the processing node is not limited in this embodiment. In this embodiment, description is provided by using an example in which the processing node is a board.

302. The processing node correspondingly generates a target processing identifier according to the processed user packet that is sent by the first target value-added server.

To enable the processing node to determine VAS servers through which the user packet passes, after receiving the processed user packet that is sent by the first target value-added server, the processing node correspondingly generates a target processing identifier, and the target processing identifier corresponds to the processed user packet.

Specifically, the target processing identifier is used to indicate that the user packet has been processed by the first target value-added server.

The target processing identifier is not limited in this embodiment, provided that the target processing identifier corresponds to the first target value-added server, and the target processing identifier has a unique identification function. That is, the processing node can determine, according to the target processing identifier, a unique first target value-added server corresponding to the target processing identifier.

In this embodiment, the processing node receives a processed user packet that is sent by the first target value-added server, and the processing node correspondingly generates a target processing identifier according to the processed user packet that is sent by the first target value-added server, so that the processing node determines, according to the target processing identifier, that the user packet has been processed by the first target value-added server. By means of the user packet forwarding control method provided in this embodiment, when different VASs forward a user packet, each processing node can determine VASs that have processed the user packet, without the need to change the original user packet, thereby effectively ensuring that each VAS provides a normal value-added service to the user packet, and avoiding a fault in a process of forwarding the user packet between value-added servers.

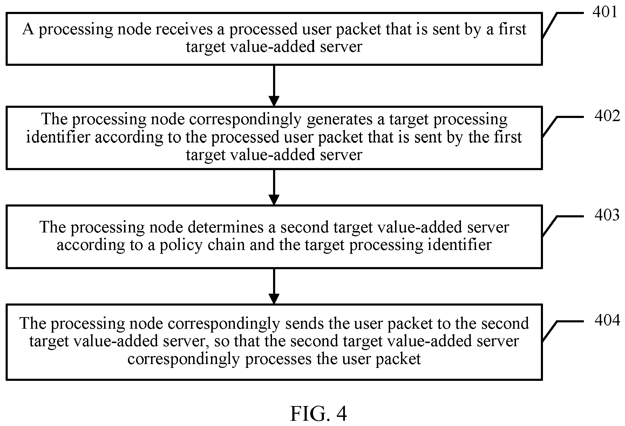

The following describes in detail with reference to FIG. 4 how the processing node determines a next-hop VAS according to the target processing identifier.

401. A processing node receives a processed user packet that is sent by a first target value-added server.

402. The processing node correspondingly generates a target processing identifier according to the processed user packet that is sent by the first target value-added server.

For a specific process of step 401 and step 402 shown in this embodiment, refer to step 301 and step 302 shown in FIG. 3. Details are not described again in this embodiment.

403. The processing node determines a second target value-added server according to a policy chain and the target processing identifier.

The processing node receives a policy chain sent by a VAS gateway switch. The policy chain is used to indicate an order in which the user packet is sent to each value-added server VAS. By means of different VASs, the VAS implements, for the user packet, a corresponding value-added service such as web optimization, video optimization, URL filtering, charging, security, and video acceleration.

The processing node can determine, according to the target processing identifier and the policy chain, a next-hop VAS through which the user packet needs to pass, that is, determine a second target value-added server. That is, a ranking of the first target value-added server in the policy chain is higher than a ranking of the second target value-added server in the policy chain, so that after the user packet is processed by the first target value-added server, the user packet needs to be sent to the second target value-added server for processing.

404. The processing node correspondingly sends the user packet to the second target value-added server, so that the second target value-added server correspondingly processes the user packet.

The processing node sends the user packet to an already determined second target value-added server, so that the second target value-added server correspondingly processes the user packet.

In this embodiment, a processing node receives a processed user packet that is sent by the first target value-added server. The processing node correspondingly generates a target processing identifier according to the processed user packet that is sent by the first target value-added server. The processing node determines a second target value-added server according to a policy chain and the target processing identifier, and sends the user packet to the second target value-added server for processing. By means of the user packet forwarding control method provided in this embodiment, when different VASs forward a user packet, each processing node can determine VASs that have processed the user packet, without the need to change the original user packet, thereby effectively preventing an exception from occurring in a process of forwarding the user packet, so that each VAS provides a normal value-added service to the user packet.

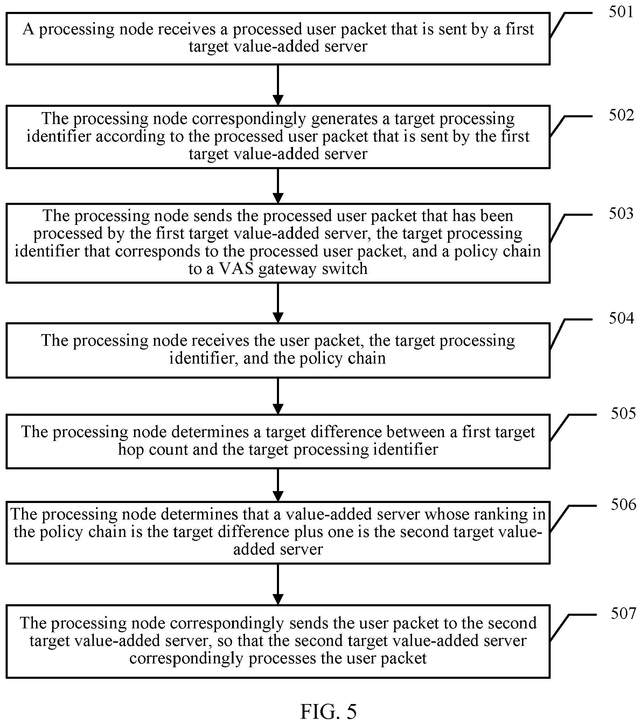

The following describes in detail with reference to FIG. 5 how the processing node specifically generates the target processing identifier.

501. A processing node receives a processed user packet that is sent by a first target value-added server.

For details, refer to step 401 shown in FIG. 4. Details are not described again in this embodiment.

502. The processing node correspondingly generates a target processing identifier according to the processed user packet that is sent by the first target value-added server.

There are two cases for the first target value-added server that has processed the user packet in this step.

In a first case, if the first target value-added server is a value-added server that is the first according to an order indicated by the policy chain to process the user packet, in a specific process of correspondingly generating, by the processing node, a target processing identifier according to the processed user packet that is sent by the first target value-added server:
First, the processing node determines a first target hop count.

The first target hop count is a total quantity of value-added servers included in the policy chain.

Second, the processing node deducts one from the first target hop count to generate the target processing identifier.

After receiving the processed user packet, the processing node can deduct one from the first target hop count to generate the target processing identifier, so that each processing node can determine, according to the first target hop count and the policy chain, that the user packet has been processed by the first target value-added server.

In a second case, if the first target value-added server is not a value-added server that is the first according to an order indicated by the policy chain to process the user packet, in a specific process of correspondingly generating, by the processing node, a target processing identifier according to the processed user packet that is sent by the first target value-added server:
First, the processing node receives a processing identifier sent by the first target value-added server.
Second, the processing node deducts one from the processing identifier to generate the target processing identifier.

503. The processing node sends the processed user packet that has been processed by the first target value-added server, the target processing identifier that corresponds to the processed user packet, and the policy chain to a VAS gateway switch.

Each processing node is connected to the VAS gateway switch. The VAS gateway switch is configured to forward the user packet between the VASs.

The VAS gateway switch determines, according to the received policy chain, a processing node connected to a second target value-added server.

The second target value-added server is a next-hop value-added server of the first target value-added server according to the order indicated by the policy chain, so that the VAS gateway switch sends the processed user packet that has been processed by the first target value-added server, the target processing identifier that corresponds to the processed user packet, and the policy chain to the processing node connected to the second target value-added server.

504. The processing node receives the user packet, the target processing identifier, and the policy chain.

The processing node determined in step 503 receives the user packet, the target processing identifier, and the policy chain that are sent by the VAS gateway switch.

505. The processing node determines a target difference between a first target hop count and the target processing identifier.

The first target hop count is a total quantity of value-added servers included in the policy chain.

506. The processing node determines that a value-added server whose ranking in the policy chain is the target difference plus one is the second target value-added server.

The processing node can determine, according to the target processing identifier and the policy chain, a next-hop VAS through which the user packet needs to pass, that is, determine a second target value-added server. That is, a ranking of the first target value-added server in the policy chain is higher than a ranking of the second target value-added server in the policy chain, so that after the user packet is processed by the first target value-added server, the user packet needs to be sent to the second target value-added server for processing.

507. The processing node correspondingly sends the user packet to the second target value-added server, so that the second target value-added server correspondingly processes the user packet.

After processing the user packet, the second target value-added server sends the processed user packet to the processing node. The processing node determines that the value-added server that sends the processed user packet is the first target value-added server. For a subsequent specific step, refer to what is shown in the foregoing step. Details are not described in this step, until the VAS gateway switch determines that the user packet has been processed by all VASs in the policy chain.

To better understand this embodiment, the following describes in detail this embodiment by using a specific application scenario.

The following describes in detail this application scenario with reference to FIG. 2.

A VAS gateway switch receives a user packet and a policy chain.

In this application scenario, description is provided by using an example in which a path of the policy chain being SCID=1 is VAS1-VAS2-VAS3-VAS4-VAS2-VAS5.

The VAS gateway switch determines, according to the policy chain, that a VAS server that is the first to process the user packet is a VAS1, and the VAS gateway switch determines that a processing node connected to the VAS 1 is a processing node 1. The VAS gateway switch sends the user packet and the policy chain to the processing node 1.

The processing node 1 sends the user packet to the VAS1 for processing. After processing the user packet, the VAS 1 sends the processed user packet to the processing node 1.

The processing node 1 determines that a total quantity of value-added servers included in the policy chain is a first target hop count.

In this application scenario, the first target hop count determined by the processing node 1 is 6.

After receiving the processed user packet that is sent by the VAS1, the processing node 1 determines that the first target hop count minus one is a target processing identifier. That is, in this embodiment, the processing node 1 determines that 6-1=5 is the target processing identifier.

The processing node 1 sends the target processing identifier to the VAS gateway switch.

The VAS gateway switch determines, according to the policy chain, that a next-hop VAS is a VAS2, and the VAS gateway switch determines that a processing node connected to the VAS2 is a processing node 2. The VAS gateway switch sends the user packet, the policy chain, and the target processing identifier to the processing node 2.

The processing node 2 receives the user packet, the policy chain, and the target processing identifier.

The processing node 2 determines a target difference between the first target hop count and the target processing identifier.

In this application scenario, the first target hop count is 6, and the target processing identifier is 5. Therefore, the processing node 2 determines that the target difference is 6-5=1.

The processing node 2 determines that a value-added server whose ranking in the policy chain is the target difference plus one is the second target value-added server.

That is, the processing node 2 determines that the second target value-added server is 1+1=2.

The processing node 2 determines that a VAS whose ranking in the policy chain is the second is the second target value-added server, that is, the VAS2.

The processing node 2 sends the user packet to the VAS2, so that the VAS2 correspondingly processes the user packet. After processing the user packet, the VAS2 sends the processed user packet to the processing node 2.

After receiving the processed user packet that is sent by the VAS2, the processing node 2 determines that 5-1=4 is the target processing identifier.

The processing node 2 sends the target processing identifier to the VAS gateway switch.

The VAS gateway switch determines, according to the policy chain, that a next-hop VAS is a VAS3. For details of how the processing node 2 generates the target processing identifier for indicating that the user packet has been processed by the VAS3, refer to the foregoing specific process of how the processing node 2 generates the target processing identifier for indicating that the user packet has been processed by the VAS2. Details are not described again.

The process shown above proceeds, until the user packet has been processed by all VASs in the policy chain.

That is, in this application scenario, when the processing node receives the user packet that is sent by the VAS, the processing node deducts one from a processing identifier that has been received by the processing node to generate a target processing identifier.

It should be noted that, in this embodiment, description is provided in detail by using an example in which the first target hop count is a total quantity of value-added servers included in the policy chain. No limitation is made, provided that the first target hop count is greater than or equal to the total quantity of value-added servers included in the policy chain.

In this embodiment, the processing node receives a processed user packet that is sent by the first target value-added server. The processing node correspondingly generates a target processing identifier according to the processed user packet that is sent by the first target value-added server. The processing node determines a second target value-added server according to a policy chain and the target processing identifier, and sends the user packet to the second target value-added server for processing. By means of the user packet forwarding control method provided in this embodiment, when different VASs forward a user packet, each processing node can determine VASs that have processed the user packet, without the need to change the original user packet, so that a next-hop VAS can be determined according to the target processing identifier, and each VAS provides a normal value-added service to the user packet.

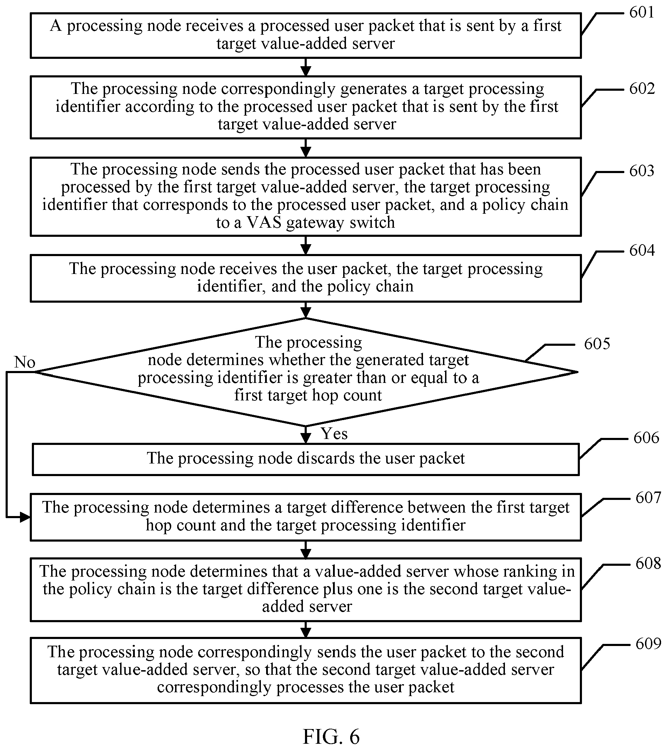

The following describes in detail with reference to the embodiment shown in FIG. 6 a forwarding control method that can detect a forwarding exception in a process of forwarding a user packet between VASs.

601. A processing node receives a processed user packet that is sent by a first target value-added server.

602. The processing node correspondingly generates a target processing identifier according to the processed user packet that is sent by the first target value-added server.

603. The processing node sends the processed user packet that has been processed by the first target value-added server, the target processing identifier that corresponds to the processed user packet, and the policy chain to a VAS gateway switch.

604. The processing node receives the user packet, the target processing identifier, and the policy chain.

For a specific process of step 601 to step 604 in this embodiment, refer to step 501 to step 504 shown in FIG. 5. Details are not described again in this embodiment.

605. The processing node determines whether the generated target processing identifier is greater than or equal to a first target hop count, and if yes, perform step 606, or if not, perform step 607.

In this step, the first target hop count is a total quantity of value-added servers included in the policy chain. It can be learned from the embodiment shown in FIG. 5 that, in this embodiment, when the processing node receives the user packet that is sent by the VAS, the processing node deducts one from a processing identifier that has been received by the processing node to generate the target processing identifier.

If the processing node determines that the target processing identifier is greater than or equal to the first target hop count, the processing node determines that a process of forwarding the user packet is abnormal, and step 606 is performed.

If the processing node determines that the target processing identifier is less than the first target hop count, the processing node determines that a process of forwarding the user packet is normal, and step 607 is performed.

It should be noted that, in this embodiment, description is provided in detail by using an example in which the first target hop count is a total quantity of value-added servers included in the policy chain. No limitation is made, provided that the first target hop count is greater than or equal to the total quantity of value-added servers included in the policy chain.

606. The processing node discards the user packet.

The processing node discards a user packet in whose forwarding process an exception occurs, so as to prevent an exception from occurring in a message in a VAS process and avoid a repeated loopback in the forwarding process.

607. The processing node determines a target difference between the first target hop count and the target processing identifier.

608. The processing node determines that a value-added server whose ranking in the policy chain is the target difference plus one is the second target value-added server.

609. The processing node correspondingly sends the user packet to the second target value-added server, so that the second target value-added server correspondingly processes the user packet.

For details of a specific process of step 607 to step 609 in this embodiment, refer to step 505 to step 507 shown in FIG. 5. Details are not described again in this embodiment.

In this embodiment, the processing node receives a processed user packet that is sent by the first target value-added server. The processing node correspondingly generates a target processing identifier according to the processed user packet that is sent by the first target value-added server. The processing node determines a second target value-added server according to a policy chain and the target processing identifier, and sends the user packet to the second target value-added server for processing. By means of the user packet forwarding control method provided in this embodiment, when different VASs forward a user packet, each processing node can determine VASs that have processed the user packet, without the need to change the original user packet, so that a next-hop VAS can be determined according to the target processing identifier, thereby avoiding a loopback of the user packet between the VASs, and further effectively preventing an exception from occurring in a process of forwarding the user packet, so that each VAS provides a normal value-added service to the user packet.

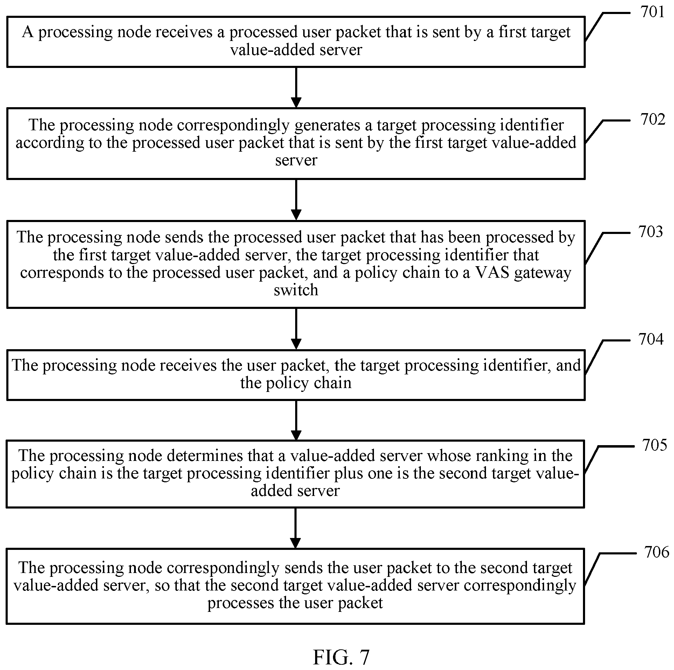

The following describes in detail with reference to FIG. 7 how the processing node specifically generates the target processing identifier.

701. A processing node receives a processed user packet that is sent by a first target value-added server.

For details, refer to step 401 shown in FIG. 4. Details are not described again in this embodiment.

702. The processing node correspondingly generates a target processing identifier according to the processed user packet that is sent by the first target value-added server.

There are two cases for the first target value-added server that has processed the user packet in this step.

In a first case, if the first target value-added server is a value-added server that is the first according to the order indicated by the policy chain to process the user packet, in a specific process of correspondingly generating, by the processing node, a target processing identifier according to the processed user packet that is sent by the first target value-added server:

First, the processing node determines a second target hop count, where the second target hop count is zero.

Second, the processing node adds one to the second target hop count to generate the target processing identifier.

After the processing node receives the processed user packet, the processing node can add one to the second target hop count to generate the target processing identifier, so that each processing node can determine, according to the second target hop count and the policy chain, that the user packet has been processed by the first target value-added server.

In a second case, if the first target value-added server is not a value-added server that is the first according to the order indicated by the policy chain to process the user packet, in a specific process of correspondingly generating, by the processing node, a target processing identifier according to the processed user packet that is sent by the first target value-added server:

First, the processing node receives a processing identifier sent by the first target value-added server.

Second, the processing node adds one to the processing identifier to generate the target processing identifier.

703. The processing node sends the processed user packet that has been processed by the first target value-added server, the target processing identifier that corresponds to the processed user packet, and the policy chain to a VAS gateway switch.

Each processing node is connected to the VAS gateway switch. The VAS gateway switch is configured to forward the user packet between the VASs.

The VAS gateway switch determines, according to the received policy chain, a processing node connected to a second target value-added server.

The second target value-added server is a next-hop value-added server of the first target value-added server according to the order indicated by the policy chain, so that the VAS gateway switch sends the processed user packet that has been processed by the first target value-added server, the target processing identifier that corresponds to the processed user packet, and the policy chain to the processing node connected to the second target value-added server.

704. The processing node receives the user packet, the target processing identifier, and the policy chain.

The processing node determined in step 703 receives the user packet, the target processing identifier, and the policy chain that are sent by the VAS gateway switch.

705. The processing node determines that a value-added server whose ranking in the policy chain is the target processing identifier plus one is the second target value-added server.

The processing node can determine, according to the target processing identifier and the policy chain, a next-hop VAS through which the user packet needs to pass, that is, determine a second target value-added server. That is, a ranking of the first target value-added server in the policy chain is higher than a ranking of the second target value-added server in the policy chain, so that after the user packet is processed by the first target value-added server, the user packet needs to be sent to the second target value-added server for processing.

706. The processing node correspondingly sends the user packet to the second target value-added server, so that the second target value-added server correspondingly processes the user packet.

After processing the user packet, the second target value-added server sends the processed user packet to the processing node. The processing node determines that the value-added server that sends the processed user packet is the first target value-added server. For a subsequent specific step, refer to what is shown in the foregoing step. Details are not described in this step, until the VAS gateway switch determines that the user packet has been processed by all VASs in the policy chain.

To better understand this embodiment, the following describes in detail this embodiment by using a specific application scenario.

The following describes in detail this application scenario with reference to FIG. 2.

A VAS gateway switch receives a user packet and a policy chain.

In this application scenario, description is provided by using an example in which a path of the policy chain being SCID=1 is VAS1-VAS2-VAS3-VAS4-VAS2-VAS5.

The VAS gateway switch determines, according to the policy chain, that a VAS server that is the first to process the user packet is a VAS1, and the VAS gateway switch determines that a processing node connected to the VAS 1 is a processing node 1. The VAS gateway switch sends the user packet and the policy chain to the processing node 1.

The processing node 1 sends the user packet to the VAS1 for processing. After processing the user packet, the VAS 1 sends the processed user packet to the processing node 1.

The processing node 1 determines a second target hop count, where the second target hop count is zero.

After receiving the processed user packet that is sent by the VAS1, the processing node 1 determines that the second target hop count plus one is a target processing identifier. That is, in this embodiment, the processing node 1 determines that 0+1=1 is the target processing identifier.

The processing node 1 sends the target processing identifier to the VAS gateway switch.

The VAS gateway switch determines, according to the policy chain, that a next-hop VAS is a VAS2. The VAS gateway switch sends the user packet, the policy chain, and the target processing identifier to a processing node 2.

The processing node 2 receives the user packet, the policy chain, and the target processing identifier.

The processing node 2 determines that a value-added server whose ranking in the policy chain is the target processing identifier plus one is the second target value-added server.

In this application scenario, the target processing identifier is 1. The processing node 2 determines that a value-added server whose ranking in the policy chain is the target processing identifier plus one is the second target value-added server. That is, a ranking of the second target value-added server in the policy chain is 1+1=2.

The processing node 2 determines that a VAS whose ranking in the policy chain is the second is the second target value-added server, that is, the VAS2.

The processing node 2 sends the user packet to the VAS2, so that the VAS2 correspondingly processes the user packet. After processing the user packet, the VAS2 sends the processed user packet to the processing node 2.

After receiving the processed user packet that is sent by the VAS2, the processing node 2 determines that 1+1=2 is the target processing identifier.

The processing node 2 sends the target processing identifier to the VAS gateway switch.

The VAS gateway switch determines, according to the policy chain, that a next-hop VAS is a VAS3. For details of how the processing node 2 generates the target processing identifier for indicating that the user packet has been processed by the VAS3, refer to the foregoing specific process of how the processing node 2 generates the target processing identifier for indicating that the user packet has been processed by the VAS2. Details are not described again.

The process shown above proceeds, until the user packet has been processed by all VASs in the policy chain.

That is, in this application scenario, when receiving the user packet that is sent by the VAS, the processing node adds one to a processing identifier that has been received by the processing node to generate a target processing identifier.

It should be noted that, this embodiment is specifically described by using an example in which the second target hop count is zero. No limitation is made.

In this embodiment, the processing node receives a processed user packet that is sent by the first target value-added server. The processing node correspondingly generates a target processing identifier according to the processed user packet that is sent by the first target value-added server. The processing node determines a second target value-added server according to a policy chain and the target processing identifier, and sends the user packet to the second target value-added server for processing. By means of the user packet forwarding control method provided in this embodiment, when different VASs forward a user packet, each processing node can determine VASs that have processed the user packet, without the need to change the original user packet, so that a next-hop VAS can be determined according to the target processing identifier, and each VAS provides a normal value-added service to the user packet.

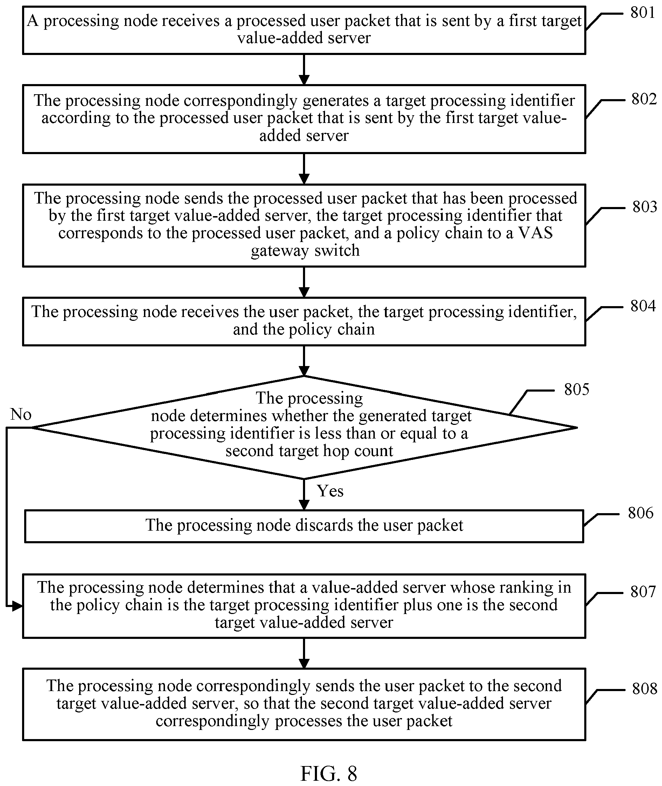

The following describes in detail with reference to the embodiment shown in FIG. 8 a forwarding control method that can detect a forwarding exception in a process of forwarding a user packet between VASs.

801. A processing node receives a processed user packet that is sent by a first target value-added server.

802. The processing node correspondingly generates a target processing identifier according to the processed user packet that is sent by the first target value-added server.

803. The processing node sends the processed user packet that has been processed by the first target value-added server, the target processing identifier that corresponds to the processed user packet, and the policy chain to a VAS gateway switch.

804. The processing node receives the user packet, the target processing identifier, and the policy chain.

For a specific process of step 801 to step 804 in this embodiment, refer to step 701 to step 704 shown in FIG. 7. Details are not described again in this embodiment.

805. The processing node determines whether the generated target processing identifier is less than or equal to a second target hop count, and if yes, perform step 806, or if not, perform step 807.

In this step, the second target hop count is zero. It can be learned from the embodiment shown in FIG. 7 that, in this embodiment, when the processing node receives the user packet that is sent by the VAS, the processing node adds one to a processing identifier that has been received by the processing node to generate the target processing identifier.

If the processing node determines that the target processing identifier is less than or equal to the second target hop count, the processing node determines that a process of forwarding the user packet is abnormal, and step 806 is performed.

If the processing node determines that the target processing identifier is greater than the second target hop count, the processing node determines that a process of forwarding the user packet is normal, and step 807 is performed.

806. The processing node discards the user packet.

The processing node discards a user packet in whose forwarding process an exception occurs, so as to prevent an exception from occurring in a message in a VAS process and avoid a repeated loopback in the forwarding process.

807. The processing node determines that a value-added server whose ranking in the policy chain is the target processing identifier plus one is the second target value-added server.

808. The processing node correspondingly sends the user packet to the second target value-added server, so that the second target value-added server correspondingly processes the user packet.

For a specific process of step 807 and step 808 shown in this embodiment, refer to step 705 and step 706 shown in FIG. 7. Details are not described again in this embodiment.

In this embodiment, the processing node receives a processed user packet that is sent by the first target value-added server. The processing node correspondingly generates a target processing identifier according to the processed user packet that is sent by the first target value-added server. The processing node determines a second target value-added server according to a policy chain and the target processing identifier, and sends the user packet to the second target value-added server for processing. By means of the user packet forwarding control method provided in this embodiment, when different VASs forward a user packet, each processing node can determine VASs that have processed the user packet, without the need to change the original user packet, so that a next-hop VAS can be determined according to the target processing identifier, thereby avoiding a loopback of the user packet between the VASs, and further effectively preventing an exception from occurring in a process of forwarding the user packet, so that each VAS provides a normal value-added service to the user packet.

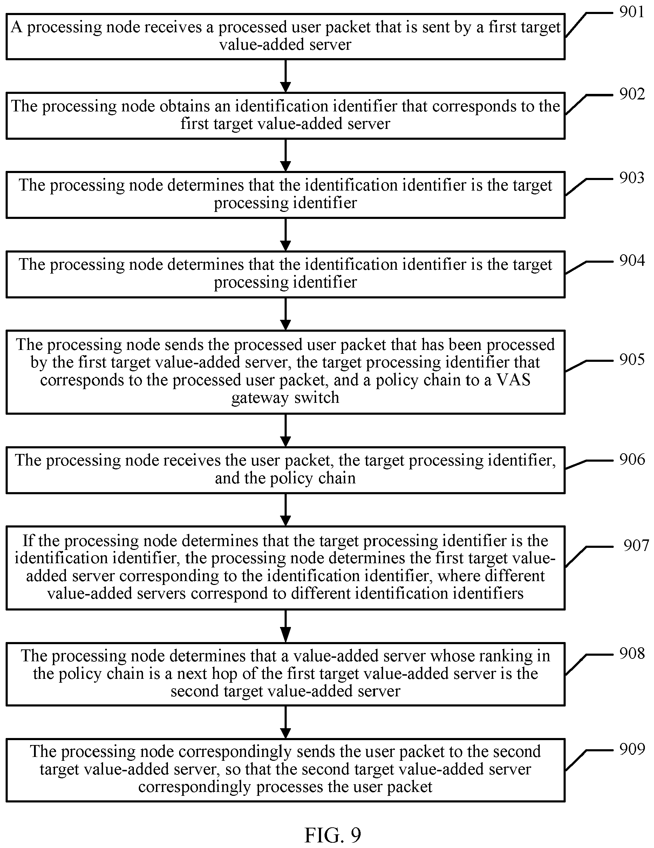

The following describes in detail with reference to FIG. 9 how the processing node specifically generates the target processing identifier.

901. A processing node receives a processed user packet that is sent by a first target value-added server.

For details, refer to step 401 shown in FIG. 4. Details are not described again in this embodiment.

902. The processing node obtains an identification identifier that corresponds to the first target value-added server.

Different value-added servers correspond to different identification identifiers.

Specifically, the identification identifier may be a reference sign of each value-added server that corresponds to each value-added server or a name that a value-added server has and that has an identification function. For details, no limitation is made in this embodiment.

The identification identifier may further be a MAC address of each value-added server, or the like.

That is, the identification identifier is not limited in this embodiment, provided that different value-added servers correspond to different identification identifiers.

903. The processing node determines that the identification identifier is the target processing identifier.

In this embodiment, when each processing node determines the target processing identifier, the processing node may add the target processing identifier to a tunnel header, so as to send the target processing identifier to the VAS gateway switch.

904. The processing node determines that the identification identifier is the target processing identifier.

905. The processing node sends the processed user packet that has been processed by the first target value-added server, the target processing identifier that corresponds to the processed user packet, and the policy chain to a VAS gateway switch.

Each processing node is connected to the VAS gateway switch. The VAS gateway switch is configured to forward the user packet between the VASs.

The VAS gateway switch determines, according to the received policy chain, a processing node connected to a second target value-added server.

The second target value-added server is a next-hop value-added server of the first target value-added server according to the order indicated by the policy chain, so that the VAS gateway switch sends the processed user packet that has been processed by the first target value-added server, the target processing identifier that corresponds to the processed user packet, and the policy chain to the processing node connected to the second target value-added server.

906. The processing node receives the user packet, the target processing identifier, and the policy chain.

The processing node determined in step 905 receives the user packet, the target processing identifier, and the policy chain that are sent by the VAS gateway switch.

907. If the processing node determines that the target processing identifier is the identification identifier, the processing node determines the first target value-added server corresponding to the identification identifier, where different value-added servers correspond to different identification identifiers.

908. The processing node determines that a value-added server whose ranking in the policy chain is a next hop of the first target value-added server is the second target value-added server.

The processing node can determine, according to the target processing identifier and the policy chain, a next-hop VAS through which the user packet needs to pass, that is, determine a second target value-added server. That is, a ranking of the first target value-added server in the policy chain is higher than a ranking of the second target value-added server in the policy chain, so that after the user packet is processed by the first target value-added server, the user packet needs to be sent to the second target value-added server for processing.

909. The processing node correspondingly sends the user packet to the second target value-added server, so that the second target value-added server correspondingly processes the user packet.

After processing the user packet, the second target value-added server sends the processed user packet to the processing node. The processing node determines that the value-added server that sends the processed user packet is the first target value-added server. For a subsequent specific step, refer to what is shown in the foregoing step. Details are not described in this step, until the VAS gateway switch determines that the user packet has been processed by all VASs in the policy chain.

To better understand this embodiment, the following describes in detail this embodiment by using a specific application scenario.

The following describes in detail this application scenario with reference to FIG. 2.

In this application scenario, description is provided by using an example in which a path of the policy chain being SCID=1 is VAS1-VAS2-VAS3-VAS4-VAS2-VAS5.

The VAS gateway switch determines, according to the policy chain, that a VAS server that is the first to process the user packet is a VAS1, and the VAS gateway switch determines that a processing node connected to the VAS 1 is a processing node 1. The VAS gateway switch sends the user packet and the policy chain to the processing node 1.

The processing node 1 sends the user packet to the VAS1 for processing. After processing the user packet, the VAS 1 sends the processed user packet to the processing node 1.

After receiving the processed user packet that is sent by the VAS 1, the processing node 1 reads an identification identifier of the VAS1. As shown above, the identification identifier is in a one-to-one correspondence with each VAS, and the identification identifier may be a sequence number, information about each VAS, a MAC address of each VAS, or the like.

In this application scenario, in an example, the identification identifier is a name of each VAS.

That is, the processing node 1 reads that a name of the VAS1 is VAS1.

The processing node 1 determines that the VAS1 is a target processing identifier.

The processing node 1 sends the target processing identifier to the VAS gateway switch.

The VAS gateway switch determines, according to the policy chain, that a next-hop VAS is a VAS2, and the VAS gateway switch determines that a processing node connected to the VAS2 is a processing node 2. The VAS gateway switch sends the user packet, the policy chain, and the target processing identifier to the processing node 2.

The processing node 2 receives the user packet, the policy chain, and the target processing identifier.

The processing node 2 determines that a value-added server whose ranking in the policy chain is a next hop of the first target value-added server is the second target value-added server.

That is, the processing node 2 reads that the policy chain determines that a VAS whose ranking is a next hop of the VAS2 is the second target value-added server. That is, in this application scenario, the second target value-added server is a VAS3. For details of how the processing node 2 generates the target processing identifier for indicating that the user packet has been processed by the VAS3, refer to the foregoing specific process of how the processing node 2 generates the target processing identifier for indicating that the user packet has been processed by the VAS2. Details are not described again.

The process shown above proceeds, until the user packet has been processed by all VASs in the policy chain.

In this application scenario, the VAS gateway switch and the processing node may further determine whether a sequential order of already recorded identification identifiers is the same as the order in the policy chain. If yes, it indicates that forwarding of the user packet between the VASs is normal. If not, it indicates that forwarding of the user packet between the VASs is abnormal. Therefore, the user packet may be discarded, so as to prevent a loopback of an abnormal user packet from occurring between processing nodes.

In this embodiment, the processing node receives a processed user packet that is sent by the first target value-added server. The processing node correspondingly generates a target processing identifier according to the processed user packet that is sent by the first target value-added server. The processing node determines a second target value-added server according to a policy chain and the target processing identifier, and sends the user packet to the second target value-added server for processing. By means of the user packet forwarding control method provided in this embodiment, when different VASs forward a user packet, each processing node can determine VASs that have processed the user packet, without the need to change the original user packet, so that a next-hop VAS can be determined according to the target processing identifier, thereby avoiding a loopback of the user packet between the VASs, and further effectively preventing an exception from occurring in a process of forwarding the user packet, so that each VAS provides a normal value-added service to the user packet.

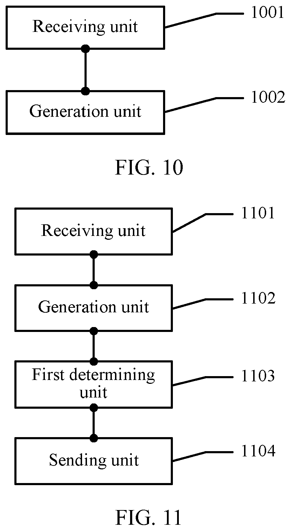

The following describes in detail with reference to FIG. 10 a specific structure of a processing node that can forward a user packet.

The processing node includes a receiving unit 1001 and a generation unit 1002.

The receiving unit 1001 is configured to receive a processed user packet that is sent by a first target value-added server, where the first target value-added server is a value-added server that has processed the user packet, and the processing node is connected to the first target value-added server.

In this embodiment, the processing node is connected to and provided with at least one value-added server VAS. The processing node is configured to forward the user packet between the value-added servers VASs.

Specifically, the first target value-added server is a value-added server that has processed the user packet, and the first target value-added server is connected to the processing node.

A specific device for implementing a function of the processing node is not limited in this embodiment. In this embodiment, description is provided by using an example in which the processing node is a board.

The generation unit 1002 is configured to correspondingly generate a target processing identifier according to the processed user packet that is sent by the first target value-added server, where the target processing identifier is used to indicate that the user packet has been processed by the first target value-added server.

To enable the processing node to determine VAS servers through which the user packet passes, after receiving the processed user packet that is sent by the first target value-added server, the processing node correspondingly generates a target processing identifier, and the target processing identifier corresponds to the processed user packet.

Specifically, the target processing identifier is used to indicate that the user packet has been processed by the first target value-added server.

In this embodiment, the target processing identifier is not limited, provided that the target processing identifier corresponds to the first target value-added server, and the target processing identifier has a unique identification function. That is, the processing node can determine, according to the target processing identifier, a unique first target value-added server corresponding to the target processing identifier.

In this embodiment, the processing node receives a processed user packet that is sent by the first target value-added server, and the processing node correspondingly generates a target processing identifier according to the processed user packet that is sent by the first target value-added server, so that the processing node determines, according to the target processing identifier, that the user packet has been processed by the first target value-added server. By means of the user packet forwarding control method provided in this embodiment, when different VASs forward a user packet, each processing node can determine VASs that have processed the user packet, without the need to change the original user packet, thereby effectively ensuring that each VAS provides a normal value-added service to the user packet, and avoiding a fault in a process of forwarding the user packet between value-added servers.

The following describes in detail with reference to FIG. 11 a specific structure of a processing node that can determine a next-hop VAS according to the target processing identifier.

The processing node includes a receiving unit 1101, a generation unit 1102, a first determining unit 1103, and a sending unit 1104.

The receiving unit 1101 is configured to receive a processed user packet that is sent by a first target value-added server, where the first target value-added server is a value-added server that has processed the user packet, and the processing node is connected to the first target value-added server.

The generation unit 1102 is configured to correspondingly generate a target processing identifier according to the processed user packet that is sent by the first target value-added server, where the target processing identifier is used to indicate that the user packet has been processed by the first target value-added server.

The first determining unit 1103 is configured to determine a second target value-added server according to a policy chain and the target processing identifier, where the policy chain is used to indicate an order in which the user packet is sent to each value-added server, and a ranking of the first target value-added server in the policy chain is higher than a ranking of the second target value-added server in the policy chain.

The processing node receives a policy chain sent by a VAS gateway switch. The policy chain is used to indicate an order in which the user packet is sent to each value-added server VAS. By means of different VASs, the VAS implements, for the user packet, a corresponding value-added service such as web optimization, video optimization, URL filtering, charging, security, and video acceleration.

The processing node can determine, according to the target processing identifier and the policy chain, a next-hop VAS through which the user packet needs to pass, that is, determine a second target value-added server. That is, a ranking of the first target value-added server in the policy chain is higher than a ranking of the second target value-added server in the policy chain, so that after the user packet is processed by the first target value-added server, the user packet needs to be sent to the second target value-added server for processing.

The sending unit 1104 is configured to correspondingly send the user packet to the second target value-added server, so that the second target value-added server correspondingly processes the user packet.

The processing node sends the user packet to an already determined second target value-added server, so that the second target value-added server correspondingly processes the user packet.

In this embodiment, the processing node receives a processed user packet that is sent by the first target value-added server. The processing node correspondingly generates a target processing identifier according to the processed user packet that is sent by the first target value-added server. The processing node determines a second target value-added server according to a policy chain and the target processing identifier, and sends the user packet to the second target value-added server for processing. By means of the user packet forwarding control method provided in this embodiment, when different VASs forward a user packet, each processing node can determine VASs that have processed the user packet, without the need to change the original user packet, thereby effectively preventing an exception from occurring in a process of forwarding the user packet, so that each VAS provides a normal value-added service to the user packet.

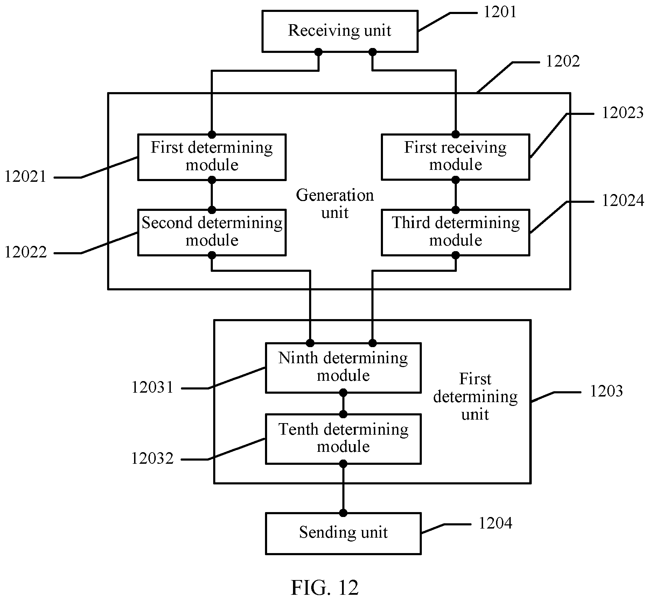

The following describes in detail with reference to FIG. 12 a specific structure of a processing node that can generate the target processing identifier.

The processing node includes a receiving unit 1201, a generation unit 1202, a first determining unit 1203, and a sending unit 1204.

The receiving unit 1201 is configured to receive a processed user packet that is sent by a first target value-added server, where the first target value-added server is a value-added server that has processed the user packet, and the processing node is connected to the first target value-added server.

The generation unit 1202 is configured to correspondingly generate a target processing identifier according to the processed user packet that is sent by the first target value-added server, where the target processing identifier is used to indicate that the user packet has been processed by the first target value-added server.

Specifically, the generation unit 1202 includes a first determining module 12021, a second determining module 12022, a first receiving module 12023, and a third determining module 12024.

The first determining module 12021 is configured to determine a first target hop count if the first target value-added server is a value-added server that is the first according to the order indicated by the policy chain to process the user packet, where the first target hop count is a total quantity of value-added servers included in the policy chain.

The second determining module 12022 is configured to deduct one from the first target hop count to generate the target processing identifier.

After the processing node receives the processed user packet, the processing node can deduct one from the first target hop count to generate the target processing identifier, so that each processing node can determine, according to the first target hop count and the policy chain, that the user packet has been processed by the first target value-added server.

The first receiving module 12023 is configured to: if the first target value-added server is not a value-added server that is the first according to the order indicated by the policy chain to process the user packet, receive a processing identifier sent by the first target value-added server.

The third determining module 12024 is configured to deduct one from the processing identifier to generate the target processing identifier.

The processing node sends the processed user packet that has been processed by the first target value-added server, the target processing identifier that corresponds to the processed user packet, and the policy chain to a VAS gateway switch.

Each processing node is connected to the VAS gateway switch. The VAS gateway switch is configured to forward the user packet between the VASs.

The VAS gateway switch determines, according to the received policy chain, a processing node connected to a second target value-added server.

The second target value-added server is a next-hop value-added server of the first target value-added server according to the order indicated by the policy chain, so that the VAS gateway switch sends the processed user packet that has been processed by the first target value-added server, the target processing identifier that corresponds to the processed user packet, and the policy chain to the processing node connected to the second target value-added server.

The first determining unit 1203 is configured to determine a second target value-added server according to a policy chain and the target processing identifier, where the policy chain is used to indicate an order in which the user packet is sent to each value-added server, and a ranking of the first target value-added server in the policy chain is higher than a ranking of the second target value-added server in the policy chain.

Specifically, the first determining unit 1203 includes:
a ninth determining module 12031, configured to determine a target difference between the first target hop count and the target processing identifier, where the first target hop count is a total quantity of value-added servers included in the policy chain; and
a tenth determining module 12032, configured to determine that a value-added server whose ranking in the policy chain is the target difference plus one is the second target value-added server.

The processing node can determine, according to the target processing identifier and the policy chain, a next-hop VAS through which the user packet needs to pass, that is, determine a second target value-added server. That is, a ranking of the first target value-added server in the policy chain is higher than a ranking of the second target value-added server in the policy chain, so that after the user packet is processed by the first target value-added server, the user packet needs to be sent to the second target value-added server for processing.

The sending unit 1204 is configured to correspondingly send the user packet to the second target value-added server, so that the second target value-added server correspondingly processes the user packet.

After processing the user packet, the second target value-added server sends the processed user packet to the processing node. The processing node determines that the value-added server that sends the processed user packet is the first target value-added server. For a subsequent specific step, refer to what is shown in the foregoing step. Details are not described in this step, until the VAS gateway switch determines that the user packet has been processed by all VASs in the policy chain.

To better understand this embodiment, the following describes in detail this embodiment by using a specific application scenario.

The following describes in detail this application scenario with reference to FIG. 2.

A VAS gateway switch receives a user packet and a policy chain.

In this application scenario, description is provided by using an example in which a path of the policy chain being SCID=1 is VAS1-VAS2-VAS3-VAS4-VAS2-VAS5.

The VAS gateway switch determines, according to the policy chain, that a VAS server that is the first to process the user packet is a VAS1, and the VAS gateway switch determines that a processing node connected to the VAS 1 is a processing node 1. The VAS gateway switch sends the user packet and the policy chain to the processing node 1.

The processing node 1 sends the user packet to the VAS1 for processing. After processing the user packet, the VAS1 sends the processed user packet to the processing node 1.

The first determining module 12021 of the processing node 1 determines that a total quantity of value-added servers included in the policy chain is a first target hop count.

In this application scenario, the first target hop count determined by the first determining module 12021 of the processing node 1 is 6.

After the receiving unit 1201 of the processing node 1 receives the processed user packet that is sent by the VAS1, the second determining module 12022 determines that the first target hop count minus one is a target processing identifier. That is, in this embodiment, the second determining module 12022 of the processing node 1 determines that 6-1=5 is the target processing identifier.

The processing node 1 sends the target processing identifier to the VAS gateway switch.

The VAS gateway switch determines, according to the policy chain, that a next-hop VAS is a VAS2, and the VAS gateway switch determines that a processing node connected to the VAS2 is a processing node 2. The VAS gateway switch sends the user packet, the policy chain, and the target processing identifier to the processing node 2.

The processing node 2 receives the user packet, the policy chain, and the target processing identifier.

The ninth determining module 12031 of the processing node 2 determines a target difference between the first target hop count and the target processing identifier.

In this application scenario, the first target hop count is 6, and the target processing identifier is 5. Therefore, the processing node 2 determines that the target difference is 6-5=1.

The tenth determining module 12032 of the processing node 2 determines that a value-added server whose ranking in the policy chain is the target difference plus one is the second target value-added server.

That is, the tenth determining module 12032 of the processing node 2 determines that the second target value-added server is 1+1=2.

The tenth determining module 12032 of the processing node 2 determines that a VAS whose ranking in the policy chain is the second is the second target value-added server, that is, the VAS2.

The sending unit 1204 of the processing node 2 sends the user packet to the VAS2, so that the VAS2 correspondingly processes the user packet. After processing the user packet, the VAS2 sends the processed user packet to the processing node 2.

After receiving the processed user packet that is sent by the VAS2, the processing node 2 determines that 5-1=4 is the target processing identifier.

The processing node 2 sends the target processing identifier to the VAS gateway switch.

The VAS gateway switch determines, according to the policy chain, that a next-hop VAS is a VAS3. For details of how the processing node 2 generates the target processing identifier for indicating that the user packet has been processed by the VAS3, refer to the foregoing specific process of how the processing node 2 generates the target processing identifier for indicating that the user packet has been processed by the VAS2. Details are not described again.

The process shown above proceeds, until the user packet has been processed by all VASs in the policy chain.

That is, in this application scenario, when the processing node receives the user packet that is sent by the VAS, the processing node deducts one from a processing identifier that has been received by the processing node to generate a target processing identifier.

It should be noted that, in this embodiment, description is provided in detail by using an example in which the first target hop count is a total quantity of value-added servers included in the policy chain. No limitation is made, provided that the first target hop count is greater than or equal to the total quantity of value-added servers included in the policy chain.

In this embodiment, the processing node receives a processed user packet that is sent by the first target value-added server. The processing node correspondingly generates a target processing identifier according to the processed user packet that is sent by the first target value-added server. The processing node determines a second target value-added server according to a policy chain and the target processing identifier, and sends the user packet to the second target value-added server for processing. By means of the user packet forwarding control method provided in this embodiment, when different VASs exchange user packets, each processing node can determine VASs that have processed the user packet, without the need to change the original user packet, so that a next-hop VAS can be determined according to the target processing identifier, and each VAS provides a normal value-added service to the user packet.

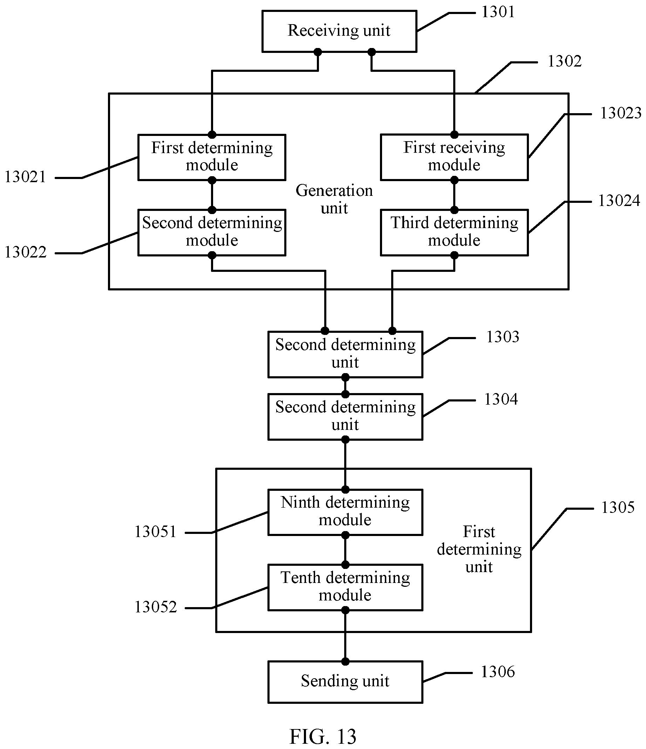

The following describes in detail with reference to FIG. 13 a specific structure of a processing node that can detect a forwarding exception in a process of forwarding a user packet between VASs.

The processing node includes:
a receiving unit 1301, configured to receive a processed user packet that is sent by a first target value-added server, where the first target value-added server is a value-added server that has processed the user packet, and the processing node is connected to the first target value-added server; and
a generation unit 1302, configured to correspondingly generate a target processing identifier according to the processed user packet that is sent by the first target value-added server, where the target processing identifier is used to indicate that the user packet has been processed by the first target value-added server.

Specifically, the generation unit 1302 includes:
a first determining module 13021, configured to determine a first target hop count if the first target value-added server is a value-added server that is the first according to the order indicated by the policy chain to process the user packet, where the first target hop count is a total quantity of value-added servers included in the policy chain;
a second determining module 13022, configured to deduct one from the first target hop count to generate the target processing identifier;
a first receiving module 13023, configured to: if the first target value-added server is not a value-added server that is the first according to the order indicated by the policy chain to process the user packet, receive a processing identifier sent by the first target value-added server; and
a third determining module 13024, configured to deduct one from the processing identifier to generate the target processing identifier.

The processing node further includes a second determining unit 1303, a third determining unit 1304, a first determining unit 1305, and a sending unit 1306.

The second determining unit 1303 is configured to determine whether the generated target processing identifier is greater than or equal to the first target hop count, where the first target hop count is a total quantity of value-added servers included in the policy chain.

In this step, the first target hop count is a total quantity of value-added servers included in the policy chain. It can be learned from the embodiment shown in FIG. 12 that, in this embodiment, when the processing node receives the user packet that is sent by the VAS, the processing node deducts one from a processing identifier that has been received by the processing node to generate the target processing identifier.

If the processing node determines that the target processing identifier is greater than or equal to the first target hop count, the processing node determines that a process of forwarding the user packet is abnormal.

If the processing node determines that the target processing identifier is less than the first target hop count, the processing node determines that a process of forwarding the user packet is normal.

It should be noted that, in this embodiment, description is provided in detail by using an example in which the first target hop count is a total quantity of value-added servers included in the policy chain. No limitation is made, provided that the first target hop count is greater than or equal to the total quantity of value-added servers included in the policy chain.

The third determining unit 1304 is configured to discard the user packet if it is determined that the generated target processing identifier is greater than or equal to the first target hop count.

The first determining unit 1305 is configured to determine a second target value-added server according to a policy chain and the target processing identifier, where the policy chain is used to indicate an order in which the user packet is sent to each value-added server, and a ranking of the first target value-added server in the policy chain is higher than a ranking of the second target value-added server in the policy chain.

Specifically, the first determining unit 1305 includes:
a ninth determining module 13051, configured to determine a target difference between the first target hop count and the target processing identifier, where the first target hop count is a total quantity of value-added servers included in the policy chain; and
a tenth determining module 13052, configured to determine that a value-added server whose ranking in the policy chain is the target difference plus one is the second target value-added server.

The sending unit 1306 is configured to correspondingly send the user packet to the second target value-added server, so that the second target value-added server correspondingly processes the user packet.

In this embodiment, the processing node receives a processed user packet that is sent by the first target value-added server. The processing node correspondingly generates a target processing identifier according to the processed user packet that is sent by the first target value-added server. The processing node determines a second target value-added server according to a policy chain and the target processing identifier, and sends the user packet to the second target value-added server for processing. By means of the user packet forwarding control method provided in this embodiment, when different VASs forward a user packet, each processing node can determine VASs that have processed the user packet, without the need to change the original user packet, so that a next-hop VAS can be determined according to the target processing identifier, thereby avoiding a loopback of the user packet between the VASs, and further effectively preventing an exception from occurring in a process of forwarding the user packet, so that each VAS provides a normal value-added service to the user packet.

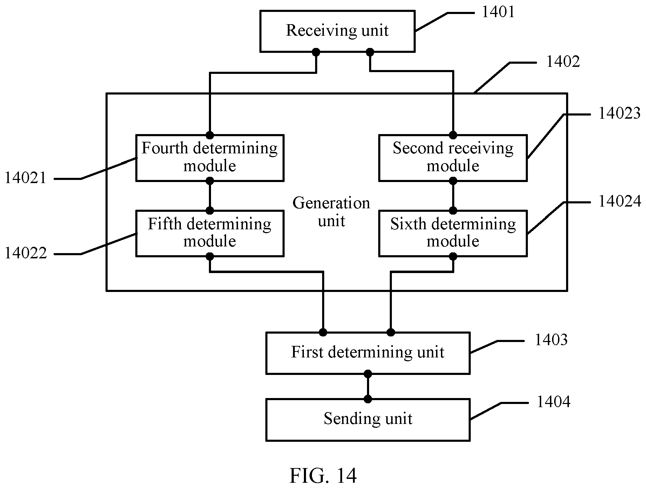

The following describes in detail with reference to FIG. 14 a specific structure of a processing node that can generate the target processing identifier.

The processing node includes a receiving unit 1401, a generation unit 1402, a first determining unit 1403, and a sending unit 1404.

The receiving unit 1401 is configured to receive a processed user packet that is sent by a first target value-added server, where the first target value-added server is a value-added server that has processed the user packet, and the processing node is connected to the first target value-added server.

The generation unit 1402 is configured to correspondingly generate a target processing identifier according to the processed user packet that is sent by the first target value-added server, where the target processing identifier is used to indicate that the user packet has been processed by the first target value-added server.

Specifically, the generation unit 1402 includes a fourth determining module 14021, a fifth determining module 14022, a second receiving module 14023, and a sixth determining module 14024.

The fourth determining module 14021 is configured to determine a second target hop count if the first target value-added server is a value-added server that is the first according to the order indicated by the policy chain to process the user packet, where the second target hop count is zero.

The fifth determining module 14022 is configured to add one to the second target hop count to generate the target processing identifier.

After the processing node receives the processed user packet, the processing node can add one to the second target hop count to generate the target processing identifier, so that each processing node can determine, according to the second target hop count and the policy chain, that the user packet has been processed by the first target value-added server.

The second receiving module 14023 is configured to: if the first target value-added server is not a value-added server that is the first according to the order indicated by the policy chain to process the user packet, receive a processing identifier sent by the first target value-added server.

The sixth determining module 14024 is configured to add one to the processing identifier to generate the target processing identifier.

The processing node sends the processed user packet that has been processed by the first target value-added server, the target processing identifier that corresponds to the processed user packet, and the policy chain to a VAS gateway switch.

Each processing node is connected to the VAS gateway switch. The VAS gateway switch is configured to forward the user packet between the VASs.

The VAS gateway switch determines, according to the received policy chain, a processing node connected to a second target value-added server.

The second target value-added server is a next-hop value-added server of the first target value-added server according to the order indicated by the policy chain, so that the VAS gateway switch sends the processed user packet that has been processed by the first target value-added server, the target processing identifier that corresponds to the processed user packet, and the policy chain to the processing node connected to the second target value-added server.

The processing node receives the user packet, the target processing identifier, and the policy chain.

The first determining unit 1403 is configured to determine a second target value-added server according to a policy chain and the target processing identifier, where the policy chain is used to indicate an order in which the user packet is sent to each value-added server, and a ranking of the first target value-added server in the policy chain is higher than a ranking of the second target value-added server in the policy chain.

Specifically, the first determining unit 1403 is further configured to determine that a value-added server whose ranking in the policy chain is the target processing identifier plus one is the second target value-added server.

The processing node can determine, according to the target processing identifier and the policy chain, a next-hop VAS through which the user packet needs to pass, that is, determine a second target value-added server. That is, a ranking of the first target value-added server in the policy chain is higher than a ranking of the second target value-added server in the policy chain, so that after the user packet is processed by the first target value-added server, the user packet needs to be sent to the second target value-added server for processing.

The sending unit 1404 is configured to correspondingly send the user packet to the second target value-added server, so that the second target value-added server correspondingly processes the user packet.

After processing the user packet, the second target value-added server sends the processed user packet to the processing node. The processing node determines that the value-added server that sends the processed user packet is the first target value-added server. For a subsequent specific step, refer to what is shown in the foregoing step. Details are not described in this step, until the VAS gateway switch determines that the user packet has been processed by all VASs in the policy chain.

To better understand this embodiment, the following describes in detail this embodiment by using a specific application scenario.

The following describes in detail this application scenario with reference to FIG. 2.

A VAS gateway switch receives a user packet and a policy chain.

In this application scenario, description is provided by using an example in which a path of the policy chain being SCID=1 is VAS1-VAS2-VAS3-VAS4-VAS2-VAS5.

The VAS gateway switch determines, according to the policy chain, that a VAS server that is the first to process the user packet is a VAS1, and the VAS gateway switch determines that a processing node connected to the VAS 1 is a processing node 1. The VAS gateway switch sends the user packet and the policy chain to the processing node 1.

The processing node 1 sends the user packet to the VAS1 for processing. After processing the user packet, the VAS 1 sends the processed user packet to the processing node 1.

The receiving unit 1401 of the processing node 1 receives a processed user packet that is sent by a first target value-added server.

The fourth determining module 14021 of the processing node 1 determines a second target hop count, where the second target hop count is zero.

After the processing node 1 receives the processed user packet that is sent by the VAS1, the fifth determining module 14022 determines that the second target hop count plus one is a target processing identifier. That is, in this embodiment, the processing node 1 determines that 0+1=1 is the target processing identifier.

The processing node 1 sends the target processing identifier to the VAS gateway switch.

The VAS gateway switch determines, according to the policy chain, that a next-hop VAS is a VAS2. The VAS gateway switch sends the user packet, the policy chain, and the target processing identifier to a processing node 2.

The second receiving module 14023 of the processing node 2 receives the user packet, the policy chain, and the target processing identifier.

The first determining unit 1403 of the processing node 2 determines that a value-added server whose ranking in the policy chain is the target processing identifier plus one is the second target value-added server.

In this application scenario, the target processing identifier is 1. The first determining unit 1403 of the processing node 2 determines that a value-added server whose ranking in the policy chain is the target processing identifier plus one is the second target value-added server. That is, a ranking of the second target value-added server in the policy chain is 1+1=2.

The first determining unit 1403 of the processing node 2 determines that a VAS whose ranking in the policy chain is the second is the second target value-added server, that is, the VAS2.

The processing node 2 sends the user packet to the VAS2, so that the VAS2 correspondingly processes the user packet. After processing the user packet, the VAS2 sends the processed user packet to the processing node 2.

After receiving the processed user packet that is sent by the VAS2, the sixth determining module 14024 of the processing node 2 determines that 1+1=2 is the target processing identifier.

The processing node 2 sends the target processing identifier to the VAS gateway switch.

The VAS gateway switch determines, according to the policy chain, that a next-hop VAS is a VAS3. For details of how the processing node 2 generates the target processing identifier for indicating that the user packet has been processed by the VAS3, refer to the foregoing specific process of how the processing node 2 generates the target processing identifier for indicating that the user packet has been processed by the VAS2. Details are not described again.

The process shown above proceeds, until the user packet has been processed by all VASs in the policy chain.

That is, in this application scenario, when the processing node receives the user packet that is sent by the VAS, the processing node adds one to a processing identifier that has been received by the processing node to generate a target processing identifier.

It should be noted that, this embodiment is specifically described by using an example in which the second target hop count is zero. No limitation is made.

In this embodiment, the processing node receives a processed user packet that is sent by the first target value-added server. The processing node correspondingly generates a target processing identifier according to the processed user packet that is sent by the first target value-added server. The processing node determines a second target value-added server according to a policy chain and the target processing identifier, and sends the user packet to the second target value-added server for processing. By means of the user packet forwarding control method provided in this embodiment, when different VASs forward a user packet, each processing node can determine VASs that have processed the user packet, without the need to change the original user packet, so that a next-hop VAS can be determined according to the target processing identifier, and each VAS provides a normal value-added service to the user packet.

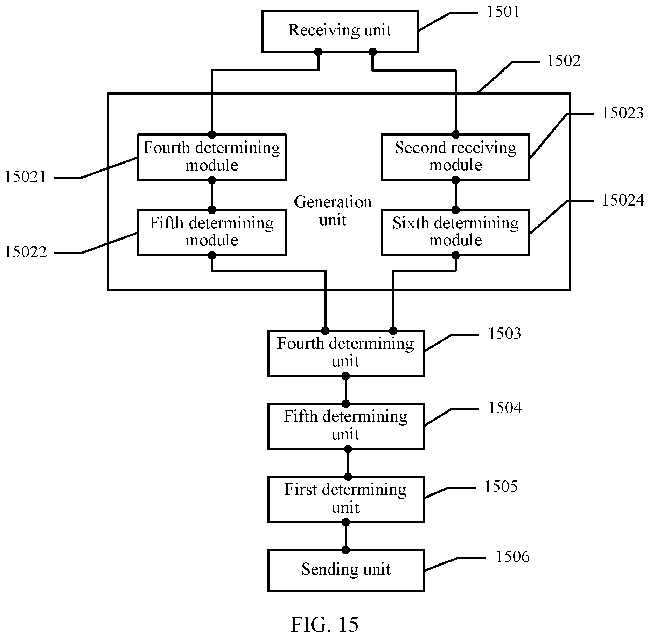

The following describes in detail with reference to FIG. 15 a specific structure of a processing node that can detect a forwarding exception in a process of forwarding a user packet between VASs.

The processing node includes:
a receiving unit 1501, configured to receive a processed user packet that is sent by a first target value-added server, where the first target value-added server is a value-added server that has processed the user packet, and the processing node is connected to the first target value-added server; and
a generation unit 1502, configured to correspondingly generate a target processing identifier according to the processed user packet that is sent by the first target value-added server, where the target processing identifier is used to indicate that the user packet has been processed by the first target value-added server.

Specifically, the generation unit 1502 includes:
a fourth determining module 15021, configured to determine a second target hop count if the first target value-added server is a value-added server that is the first according to the order indicated by the policy chain to process the user packet, where the second target hop count is zero;
a fifth determining module 15022, configured to add one to the second target hop count to generate the target processing identifier;
a second receiving module 15023, configured to: if the first target value-added server is not a value-added server that is the first according to the order indicated by the policy chain to process the user packet, receive a processing identifier sent by the first target value-added server; and
a sixth determining module 15024, configured to add one to the processing identifier to generate the target processing identifier.

The processing node further includes a fourth determining unit 1503, a fifth determining unit 1504, a first determining unit 1505, and a sending unit 1506.

The fourth determining unit 1503 is configured to determine whether the generated target processing identifier is less than or equal to the second target hop count, where the second target hop count is zero.

In this step, the second target hop count is zero. It can be learned from the embodiment shown in FIG. 14 that, in this embodiment, when the processing node receives the user packet that is sent by the VAS, the processing node adds one to a processing identifier that has been received by the processing node to generate the target processing identifier.

If the processing node determines that the target processing identifier is less than or equal to the second target hop count, the processing node determines that a process of forwarding the user packet is abnormal.

If the processing node determines that the target processing identifier is greater than the second target hop count, the processing node determines that a process of forwarding the user packet is normal.

The fifth determining unit 1504 is configured to discard the user packet if it is determined that the generated target processing identifier is less than or equal to the second target hop count.

The first determining unit 1505 is configured to determine a second target value-added server according to a policy chain and the target processing identifier, where the policy chain is used to indicate an order in which the user packet is sent to each value-added server, and a ranking of the first target value-added server in the policy chain is higher than a ranking of the second target value-added server in the policy chain.

Specifically, the first determining unit 1505 is further configured to determine that a value-added server whose ranking in the policy chain is the target processing identifier plus one is the second target value-added server.

The sending unit 1506 is configured to correspondingly send the user packet to the second target value-added server, so that the second target value-added server correspondingly processes the user packet.

In this embodiment, the processing node receives a processed user packet that is sent by the first target value-added server. The processing node correspondingly generates a target processing identifier according to the processed user packet that is sent by the first target value-added server. The processing node determines a second target value-added server according to a policy chain and the target processing identifier, and sends the user packet to the second target value-added server for processing. By means of the user packet forwarding control method provided in this embodiment, when different VASs forward a user packet, each processing node can determine VASs that have processed the user packet, without the need to change the original user packet, so that a next-hop VAS can be determined according to the target processing identifier, thereby avoiding a loopback of the user packet between the VASs, and further effectively preventing an exception from occurring in a process of forwarding the user packet, so that each VAS provides a normal value-added service to the user packet.

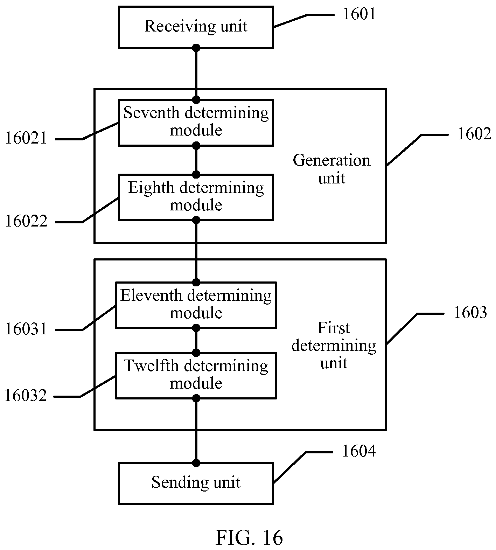

The following describes in detail with reference to FIG. 16 a specific structure of a processing node that can generate the target processing identifier.

The processing node includes:
a receiving unit 1601, configured to receive a processed user packet that is sent by a first target value-added server, where the first target value-added server is a value-added server that has processed the user packet, and the processing node is connected to the first target value-added server; and
a generation unit 1602, configured to correspondingly generate a target processing identifier according to the processed user packet that is sent by the first target value-added server, where the target processing identifier is used to indicate that the user packet has been processed by the first target value-added server.

Specifically, the generation unit 1602 includes a seventh determining module 16021 and an eighth determining module 16022.

The seventh determining module 16021 is configured to obtain an identification identifier corresponding to the first target value-added server, where different value-added servers correspond to different identification identifiers.

Specifically, the identification identifier may be a reference sign of each value-added server that corresponds to each value-added server or a name that a value-added server has and that has an identification function. For details, no limitation is made in this embodiment.

The identification identifier may further be a MAC address of each value-added server, or the like.

That is, the identification identifier is not limited in this embodiment, provided that different value-added servers correspond to different identification identifiers.

The eighth determining module 16022 is configured to determine that the identification identifier is the target processing identifier.

In this embodiment, when each processing node determines the target processing identifier, the processing node may add the target processing identifier to a tunnel header, so as to send the target processing identifier to the VAS gateway switch.

The processing node sends the processed user packet that has been processed by the first target value-added server, the target processing identifier that corresponds to the processed user packet, and the policy chain to a VAS gateway switch.

Each processing node is connected to the VAS gateway switch. The VAS gateway switch is configured to forward the user packet between the VASs.

The VAS gateway switch determines, according to the received policy chain, a processing node connected to a second target value-added server.

The second target value-added server is a next-hop value-added server of the first target value-added server according to the order indicated by the policy chain, so that the VAS gateway switch sends the processed user packet that has been processed by the first target value-added server, the target processing identifier that corresponds to the processed user packet, and the policy chain to the processing node connected to the second target value-added server.

The processing node further includes a first determining unit 1603 and a sending unit 1604.

The first determining unit 1603 is configured to determine a second target value-added server according to a policy chain and the target processing identifier, where the policy chain is used to indicate an order in which the user packet is sent to each value-added server, and a ranking of the first target value-added server in the policy chain is higher than a ranking of the second target value-added server in the policy chain.

Specifically, the first determining unit 1603 includes:
an eleventh determining module 16031, configured to: if it is determined that the target processing identifier is the identification identifier, determine the first target value-added server corresponding to the identification identifier, where different value-added servers correspond to different identification identifiers; and
a twelfth determining module 16032, configured to determine that a value-added server whose ranking in the policy chain is a next hop of the first target value-added server is the second target value-added server.

The processing node can determine, according to the target processing identifier and the policy chain, a next-hop VAS through which the user packet needs to pass, that is, determine a second target value-added server. That is, a ranking of the first target value-added server in the policy chain is higher than a ranking of the second target value-added server in the policy chain, so that after the user packet is processed by the first target value-added server, the user packet needs to be sent to the second target value-added server for processing.

The sending unit 1604 is configured to correspondingly send the user packet to the second target value-added server, so that the second target value-added server correspondingly processes the user packet.

After processing the user packet, the second target value-added server sends the processed user packet to the processing node. The processing node determines that the value-added server that sends the processed user packet is the first target value-added server. For a subsequent specific step, refer to what is shown in the foregoing step. Details are not described in this step, until the VAS gateway switch determines that the user packet has been processed by all VASs in the policy chain.

To better understand this embodiment, the following describes in detail this embodiment by using a specific application scenario.

The following describes in detail this application scenario with reference to FIG. 2.

In this application scenario, description is provided by using an example in which a path of the policy chain being SCID=1 is VAS1-VAS2-VAS3-VAS4-VAS2-VAS5.

The VAS gateway switch determines, according to the policy chain, that a VAS server that is the first to process the user packet is a VAS1, and the VAS gateway switch determines that a processing node connected to the VAS1 is a processing node 1. The VAS gateway switch sends the user packet and the policy chain to the processing node 1.

The processing node 1 sends the user packet to the VAS1 for processing. After processing the user packet, the VAS 1 sends the processed user packet to the processing node 1.

After receiving the processed user packet that is sent by the VAS1, the receiving unit 1601 of the processing node 1 reads an identification identifier of the VAS1. As shown above, the identification identifier is in a one-to-one correspondence with each VAS, and the identification identifier may be a sequence number, information about each VAS, a MAC address of each VAS, or the like.

In this application scenario, in an example, the identification identifier is a name of each VAS.

That is, the seventh determining module 16021 of the processing node 1 reads that a name of the VAS 1 is VAS 1.

The eighth determining module 16022 of the processing node 1 determines that the VAS 1 is a target processing identifier.

The processing node 1 sends the target processing identifier to the VAS gateway switch.

The VAS gateway switch determines, according to the policy chain, that a next-hop VAS is a VAS2, and the VAS gateway switch determines that a processing node connected to the VAS2 is a processing node 2. The VAS gateway switch sends the user packet, the policy chain, and the target processing identifier to the processing node 2.

The receiving unit 1601 of the processing node 2 receives the user packet, the policy chain, and the target processing identifier.

The first determining unit 1603 of the processing node 2 determines that a value-added server whose ranking in the policy chain is a next hop of the first target value-added server is the second target value-added server.

That is, the processing node 2 reads that the policy chain determines that a VAS whose ranking is a next hop of the VAS2 is the second target value-added server. That is, in this application scenario, the second target value-added server is a VAS3. For details of how the processing node 2 generates the target processing identifier for indicating that the user packet has been processed by the VAS3, refer to the foregoing specific process of how the processing node 2 generates the target processing identifier for indicating that the user packet has been processed by the VAS2. Details are not described again.

The process shown above proceeds, until the user packet has been processed by all VASs in the policy chain.

In this application scenario, the VAS gateway switch and the processing node may further determine whether a sequential order of already recorded identification identifiers is the same as the order in the policy chain. If yes, it indicates that forwarding of the user packet between the VASs is normal. If not, it indicates that forwarding of the user packet between the VASs is abnormal. Therefore, the user packet may be discarded, so as to prevent a loopback of an abnormal user packet from occurring between processing nodes.

In this embodiment, the processing node receives a processed user packet that is sent by the first target value-added server. The processing node correspondingly generates a target processing identifier according to the processed user packet that is sent by the first target value-added server. The processing node determines a second target value-added server according to a policy chain and the target processing identifier, and sends the user packet to the second target value-added server for processing. By means of the user packet forwarding control method provided in this embodiment, when different VASs forward a user packet, each processing node can determine VASs that have processed the user packet, without the need to change the original user packet, so that a next-hop VAS can be determined according to the target processing identifier, thereby avoiding a loopback of the user packet between the VASs, and further effectively preventing an exception from occurring in a process of forwarding the user packet, so that each VAS provides a normal value-added service to the user packet.

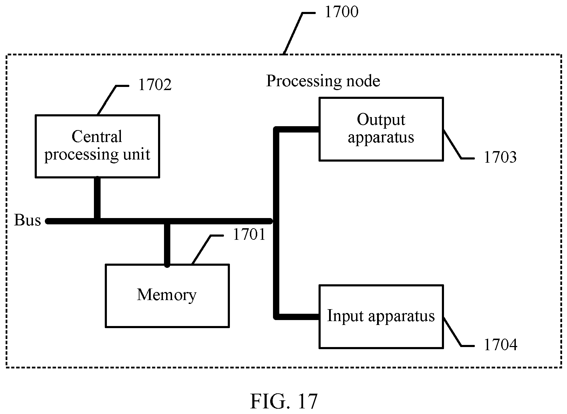

In the embodiments shown in FIG. 10 to FIG. 16, the structure of the processing node is described in detail from the perspective of a functional module entity. The following describes in detail the structure of the processing node in this embodiment of the present invention from the perspective of hardware with reference to FIG. 17. For details, refer to FIG. 17.

As shown in FIG. 17, the processing node 1700 includes a memory 1701, a central processing unit (Central Processing Unit, CPU for short below) 1702, an output apparatus 1703, and an input apparatus 1704. There may be one or more central processing units 1702 shown in FIG. 17. In the embodiment shown in FIG. 17, description is provided by using an example in which there is one central processing unit 1702.

In some embodiments of the present invention, the central processing unit 1702, the memory 1701, the output apparatus 1703, and the input apparatus 1704 may be connected by using a bus or in another manner. Connection by using the bus is used as an example in FIG. 17.

It should be noted that, a base station provided in this embodiment is merely an example of the base station provided in the embodiments of the present invention. Abase station involved in the embodiments of the present invention may include more or fewer components than those shown in FIG. 17, or two or more components may be combined, or a different component configuration or arrangement may be used. The components may be implemented in hardware, software, or a combination of hardware and software, where the hardware includes one or more signal processing and/or application-specific integrated circuits.

In this embodiment of the present invention, the central processing unit 1702 is configured to:
receive a processed user packet that is sent by a first target value-added server, where the first target value-added server is a value-added server that has processed the user packet, and the processing node is connected to the first target value-added server; and
correspondingly generate a target processing identifier according to the processed user packet that is sent by the first target value-added server, where the target processing identifier is used to indicate that the user packet has been processed by the first target value-added server.

In some other embodiments of the present invention, the central processing unit 1702 is further configured to:
determine a second target value-added server according to a policy chain and the target processing identifier, where the policy chain is used to indicate an order in which the user packet is sent to each value-added server, and a ranking of the first target value-added server in the policy chain is higher than a ranking of the second target value-added server in the policy chain; and
correspondingly send the user packet to the second target value-added server, so that the second target value-added server correspondingly processes the user packet.

In some other embodiments of the present invention, the central processing unit 1702 is further configured to:
determine a first target hop count if the first target value-added server is a value-added server that is the first according to the order indicated by the policy chain to process the user packet, where the first target hop count is a total quantity of value-added servers included in the policy chain; and
deduct one from the first target hop count to generate the target processing identifier.

In some other embodiments of the present invention, the central processing unit 1702 is further configured to:
if the first target value-added server is not a value-added server that is the first according to the order indicated by the policy chain to process the user packet, receive a processing identifier sent by the first target value-added server; and
deduct one from the processing identifier to generate the target processing identifier.

In some other embodiments of the present invention, the central processing unit 1702 is further configured to:
determine whether the generated target processing identifier is greater than or equal to the first target hop count, where the first target hop count is a total quantity of value-added servers included in the policy chain; and
discard the user packet if it is determined that the generated target processing identifier is greater than or equal to the first target hop count.

In some other embodiments of the present invention, the central processing unit 1702 is further configured to:
determine a second target hop count if the first target value-added server is a value-added server that is the first according to the order indicated by the policy chain to process the user packet, where the second target hop count is zero; and
add one to the second target hop count to generate the target processing identifier.

In some other embodiments of the present invention, the central processing unit 1702 is further configured to:
if the first target value-added server is not a value-added server that is the first according to the order indicated by the policy chain to process the user packet, receive a processing identifier sent by the first target value-added server; and
add one to the processing identifier to generate the target processing identifier.

In some other embodiments of the present invention, the central processing unit 1702 is further configured to:
determine whether the generated target processing identifier is less than or equal to the second target hop count, where the second target hop count is zero; and
discard the user packet if it is determined that the generated target processing identifier is less than or equal to the second target hop count.

In some other embodiments of the present invention, the central processing unit 1702 is further configured to:
obtain an identification identifier corresponding to the first target value-added server, where different value-added servers correspond to different identification identifiers; and
determine that the identification identifier is the target processing identifier.

In some other embodiments of the present invention, the central processing unit 1702 is further configured to:
determine a target difference between the first target hop count and the target processing identifier, where the first target hop count is a total quantity of value-added servers included in the policy chain; and
determine that a value-added server whose ranking in the policy chain is the target difference plus one is the second target value-added server.

In some other embodiments of the present invention, the central processing unit 1702 is further configured to:
further determine that a value-added server whose ranking in the policy chain is the target processing identifier plus one is the second target value-added server.

In some other embodiments of the present invention, the central processing unit 1702 is further configured to:
if it is determined that the target processing identifier is the identification identifier, determine the first target value-added server corresponding to the identification identifier, where different value-added servers correspond to different identification identifiers; and
determine that a value-added server whose ranking in the policy chain is a next hop of the first target value-added server is the second target value-added server.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention, but not for limiting the present invention.

## Claims

1. A user packet forwarding control method, comprising:
receiving (301), by a processing node, a processed user packet that is sent by a first target value-added server, wherein the first target value-added server is a value-added server that has processed the user packet, and the processing node is connected to the first target value-added server; and
correspondingly generating (302), by the processing node, a target processing identifier according to the processed user packet that is sent by the first target value-added server, wherein the target processing identifier is used to indicate that the user packet has been processed by the first target value-added server;
wherein after the correspondingly generating, by the processing node, a target processing identifier according to the processed user packet that is sent by the first target value-added server, the method further comprises:
determining, by the processing node, a second target value-added server according to a policy chain and the target processing identifier, wherein the policy chain is used to indicate an order in which the user packet is sent to each value-added server, and a ranking of the first target value-added server in the policy chain is higher than a ranking of the second target value-added server in the policy chain; and
correspondingly sending, by the processing node, the user packet to the second target value-added server, so that the second target value-added server correspondingly processes the user packet;
wherein if the first target value-added server is a value-added server that is the first according to the order indicated by the policy chain to process the user packet, the correspondingly generating, by the processing node, a target processing identifier according to the processed user packet that is sent by the first target value-added server comprises:
determining, by the processing node, a first target hop count, wherein the first target hop count is a total quantity of value-added servers comprised in the policy chain; and
deducting, by the processing node, one from the first target hop count to generate the target processing identifier; or
wherein if the first target value-added server is a value-added server that is the first according to the order indicated by the policy chain to process the user packet, the correspondingly generating, by the processing node, a target processing identifier according to the processed user packet that is sent by the first target value-added server comprises:
determining, by the processing node, a second target hop count, wherein the second target hop count is zero; and
adding, by the processing node, one to the second target hop count to generate the target processing identifier.

2. The forwarding control method according to claim 1, wherein if the first target value-added server is not a value-added server that is the first according to the order indicated by the policy chain to process the user packet, the correspondingly generating, by the processing node, a target processing identifier according to the processed user packet that is sent by the first target value-added server comprises:
receiving, by the processing node, a processing identifier sent by the first target value-added server; and
deducting, by the processing node, one from the processing identifier to generate the target processing identifier.

3. The forwarding control method according to claim 1, wherein if the first target value-added server is not a value-added server that is the first according to the order indicated by the policy chain to process the user packet, the correspondingly generating, by the processing node, a target processing identifier according to the processed user packet that is sent by the first target value-added server comprises:
receiving, by the processing node, a processing identifier sent by the first target value-added server; and
adding, by the processing node, one to the processing identifier to generate the target processing identifier.

4. The forwarding control method according to claim 1, wherein the correspondingly generating, by the processing node, a target processing identifier according to the processed user packet that is sent by the first target value-added server comprises:
obtaining, by the processing node, an identification identifier corresponding to the first target value-added server, wherein different value-added servers correspond to different identification identifiers; and
determining, by the processing node, that the identification identifier is the target processing identifier.

5. The forwarding control method according to claim 4, wherein the determining, by the processing node, a second target value-added server according to a policy chain and the target processing identifier comprises:
if the processing node determines that the target processing identifier is the identification identifier, determining, by the processing node, the first target value-added server corresponding to the identification identifier, wherein different value-added servers correspond to different identification identifiers; and
determining, by the processing node, that a value-added server whose ranking in the policy chain is a next hop of the first target value-added server is the second target value-added server.

6. A processing node, comprising:
a receiving unit (1001), configured to receive a processed user packet that is sent by a first target value-added server, wherein the first target value-added server is a value-added server that has processed the user packet, and the processing node is connected to the first target value-added server; and
a generation unit (1002), configured to correspondingly generate a target processing identifier according to the processed user packet that is sent by the first target value-added server, wherein the target processing identifier is used to indicate that the user packet has been processed by the first target value-added server;
wherein the processing node further comprises:
a first determining unit (1103), configured to determine a second target value-added server according to a policy chain and the target processing identifier, wherein the policy chain is used to indicate an order in which the user packet is sent to each value-added server, and a ranking of the first target value-added server in the policy chain is higher than a ranking of the second target value-added server in the policy chain; and
a sending unit (1104), configured to correspondingly send the user packet to the second target value-added server, so that the second target value-added server correspondingly processes the user packet;
wherein the generation unit comprises:
a first determining module (12021), configured to determine a first target hop count if the first target value-added server is a value-added server that is the first according to the order indicated by the policy chain to process the user packet, wherein the first target hop count is a total quantity of value-added servers comprised in the policy chain; and
a second determining module (12022), configured to deduct one from the first target hop count to generate the target processing identifier;
wherein the generation unit comprises:
a fourth determining module (14021), configured to determine a second target hop count if the first target value-added server is a value-added server that is the first according to the order indicated by the policy chain to process the user packet, wherein the second target hop count is zero; and
a fifth determining module (14022), configured to add one to the second target hop count to generate the target processing identifier.

7. The processing node according to claim 6, wherein the generation unit comprises:
a first receiving module (12023), configured to: if the first target value-added server is not a value-added server that is the first according to the order indicated by the policy chain to process the user packet, receive a processing identifier sent by the first target value-added server; and
a third determining module (12024), configured to deduct one from the processing identifier to generate the target processing identifier.

8. The processing node according to claim 6, wherein the generation unit comprises:
a second receiving module (14023), configured to: if the first target value-added server is not a value-added server that is the first according to the order indicated by the policy chain to process the user packet, receive a processing identifier sent by the first target value-added server; and
a sixth determining module (14024), configured to add one to the processing identifier to generate the target processing identifier.

9. The processing node according to claim 6, wherein the generation unit comprises:
a seventh determining module (16021), configured to obtain an identification identifier corresponding to the first target value-added server, wherein different value-added servers correspond to different identification identifiers; and
an eighth determining module (16022), configured to determine that the identification identifier is the target processing identifier.

10. The processing node according to claim 9, wherein the first determining unit comprises:
an eleventh determining module (16031), configured to: if it is determined that the target processing identifier is the identification identifier, determine the first target value-added server corresponding to the identification identifier, wherein different value-added servers correspond to different identification identifiers; and
a twelfth determining module (16032), configured to determine that a value-added server whose ranking in the policy chain is a next hop of the first target value-added server is the second target value-added server.

## Patentansprüche

1. Benutzerpaket-Weiterleitungs-Steuerungsverfahren, Folgendes umfassend:
Empfangen (301), durch einen Verarbeitungsknoten, eines verarbeiteten Benutzerpakets, das von einem ersten Ziel-Mehrwert-Server gesendet wird, wobei der erste Ziel-Mehrwert-Server ein Mehrwert-Server ist, der das Benutzerpaket verarbeitet hat, und wobei der Verarbeitungsknoten mit dem ersten Ziel-Mehrwert-Server verbunden ist; und
entsprechendes Erzeugen (302), durch den Verarbeitungsknoten, einer Ziel-Verarbeitungskennung gemäß dem verarbeiteten Benutzerpaket, das durch den ersten Ziel-Mehrwert-Server gesendet wird, wobei die Ziel-Verarbeitungskennung verwendet wird, um anzuzeigen, dass das Benutzerpaket durch den ersten Ziel-Mehrwert-Server verarbeitet worden ist;
wobei nach dem entsprechenden Erzeugen einer Ziel-Verarbeitungskennung durch den Verarbeitungsknoten gemäß dem verarbeiteten Benutzerpaket, das durch den ersten Ziel-Mehrwert-Server gesendet wird, das Verfahren ferner Folgendes umfasst:
Bestimmen, durch den Verarbeitungsknoten, eines zweiten Ziel-Mehrwert-Servers gemäß einer Richtlinienkette und der Ziel-Verarbeitungskennung, wobei die Richtlinienkette verwendet wird, um eine Reihenfolge anzugeben, in der das Benutzerpaket an jeden Mehrwert-Server gesendet wird, und wobei ein Rang des ersten Ziel-Mehrwert-Servers in der Richtlinienkette höher ist als ein Rang des zweiten Ziel-Mehrwert-Servers in der Richtlinienkette; und
entsprechendes Senden, durch den Verarbeitungsknoten, des Benutzerpakets an den zweiten Ziel-Mehrwert-Server, so dass der zweite Ziel-Mehrwert-Server das Benutzerpaket entsprechend verarbeitet;
wobei, wenn der erste Ziel-Mehrwert-Server ein Mehrwert-Server ist, der entsprechend der durch die Richtlinienkette angegebenen Reihenfolge als erster das Benutzerpaket verarbeitet, die entsprechende Erzeugung einer Ziel-Verarbeitungskennung durch den Verarbeitungsknoten entsprechend dem verarbeiteten Benutzerpaket, das durch den ersten Ziel-Mehrwert-Server gesendet wird, Folgendes umfasst:
Bestimmen, durch den Verarbeitungsknoten, einer ersten Ziel-Hop-Zahl, wobei die erste Ziel-Hop-Zahl eine Gesamtmenge von Mehrwert-Servern ist, die in der Richtlinienkette enthalten sind; und
Abziehen, durch den Verarbeitungsknoten, von Eins von der ersten Ziel-Hop-Zahl, um die Ziel-Verarbeitungskennung zu erzeugen; oder
wobei, wenn der erste Ziel-Mehrwert-Server ein Mehrwert-Server ist, der entsprechend der durch die Richtlinienkette angegebenen Reihenfolge als erster das Benutzerpaket verarbeitet, die entsprechende Erzeugung einer Ziel-Verarbeitungskennung durch den Verarbeitungsknoten entsprechend dem verarbeiteten Benutzerpaket, das durch den ersten Ziel-Mehrwert-Server gesendet wird, Folgendes umfasst:
Bestimmen, durch den Verarbeitungsknoten, einer zweiten Ziel-Hop-Zahl, wobei die zweite Ziel-Hop-Zahl Null ist; und
Addieren, durch den Verarbeitungsknoten, von Eins zur zweiten Ziel-Hop-Zahl, um die Ziel-Verarbeitungskennung zu erzeugen.

2. Weiterleitungs-Steuerungsverfahren nach Anspruch 1, wobei, wenn der erste Ziel-Mehrwert-Server kein Mehrwert-Server ist, der gemäß der durch die Richtlinienkette angegebenen Reihenfolge zur Verarbeitung des Benutzerpakets als erster das Benutzerpaket verarbeitet, das entsprechende Erzeugen, durch den Verarbeitungsknoten, einer Ziel-Verarbeitungskennung gemäß dem verarbeiteten Benutzerpaket, das durch den ersten Ziel-Mehrwert-Server gesendet wird, Folgendes umfasst:
Empfangen, durch den Verarbeitungsknoten, einer vom ersten Ziel-Mehrwert-Server gesendeten Verarbeitungskennung; und
Abziehen, durch den Verarbeitungsknoten, von Eins von der Verarbeitungskennung, um die Ziel-Verarbeitungskennung zu erzeugen.

3. Weiterleitungssteuerungsverfahren nach Anspruch 1, wobei, wenn der erste Ziel-Mehrwert-Server kein Mehrwert-Server ist, der gemäß der durch die Richtlinienkette angegebenen Reihenfolge zur Verarbeitung des Benutzerpakets als erster das Benutzerpaket verarbeitet, das entsprechende Erzeugen, durch den Verarbeitungsknoten, einer Ziel-Verarbeitungskennung gemäß dem verarbeiteten Benutzerpaket, das durch den ersten Ziel-Mehrwert-Server gesendet wird, Folgendes umfasst:
Empfangen, durch den Verarbeitungsknoten, einer vom ersten Ziel-Mehrwert-Server gesendeten Verarbeitungskennung; und
Addieren, durch den Verarbeitungsknoten, von Eins zur Verarbeitungskennung, um die Ziel-Verarbeitungskennung zu erzeugen.

4. Weiterleitungssteuerungsverfahren nach Anspruch 1, wobei das entsprechende Erzeugen, durch den Verarbeitungsknoten, einer Ziel-Verarbeitungskennung gemäß dem verarbeiteten Benutzerpaket, das durch den ersten Ziel-Mehrwert-Server gesendet wird, Folgendes umfasst:
Erhalten, durch den Verarbeitungsknoten, einer Identifikationskennung, die dem ersten Ziel-Mehrwert-Server entspricht, wobei unterschiedliche Mehrwert-Server unterschiedlichen Identifikationskennungen entsprechen; und
Bestimmen, durch den Verarbeitungsknoten, dass die Identifikationskennung die Ziel-Verarbeitungskennung ist.

5. Weiterleitungs-Steuerungsverfahren nach Anspruch 4, wobei das Bestimmen, durch den Verarbeitungsknoten, eines zweiten Ziel-Mehrwert-Servers gemäß einer Richtlinienkette und der Ziel-Verarbeitungskennung Folgendes umfasst:
wenn der Verarbeitungsknoten bestimmt, dass die Ziel-Verarbeitungskennung die Identifikationskennung ist, Bestimmen, durch den Verarbeitungsknoten, des ersten Ziel-Mehrwert-Servers, der der Identifikationskennung entspricht, wobei verschiedene Mehrwert-Server verschiedenen Identifikationskennungen entsprechen; und
Bestimmen durch den Verarbeitungsknoten, dass ein Mehrwert-Server, dessen Rang in der Richtlinienkette ein nächster Hop des ersten Ziel-Mehrwert-Servers ist, der zweite Ziel-Mehrwert-Server ist.

6. Verarbeitungsknoten, umfassend:
eine Empfangseinheit (1001), die dafür konfiguriert ist, ein verarbeitetes Benutzerpaket zu empfangen, das von einem ersten Ziel-Mehrwert-Server gesendet wird, wobei der erste Ziel-Mehrwert-Server ein Mehrwert-Server ist, der das Benutzerpaket verarbeitet hat, und wobei der Verarbeitungsknoten mit dem ersten Ziel-Mehrwert-Server verbunden ist; und
eine Erzeugungseinheit (1002), diedafür konfiguriert ist, dementsprechend eine Ziel-Verarbeitungskennung gemäß dem verarbeiteten Benutzerpaket zu erzeugen, das vom ersten Ziel-Mehrwert-Server gesendet wird, wobei die Ziel-Verarbeitungskennung verwendet wird, um anzuzeigen, dass das Benutzerpaket von dem ersten Ziel-Mehrwert-Server verarbeitet worden ist;
wobei der Verarbeitungsknoten ferner Folgendes umfasst:
eine erste Bestimmungseinheit (1103), die dafür konfiguriert ist, einen zweiten Ziel-Mehrwert-Server gemäß einer Richtlinienkette und der Ziel-Verarbeitungskennung zu bestimmen, wobei die Richtlinienkette verwendet wird, um eine Reihenfolge anzugeben, in der das Benutzerpaket an jeden Mehrwert-Server gesendet wird, und wobei ein Rang des ersten Ziel-Mehrwert-Servers in der Richtlinienkette höher ist als ein Rang des zweiten Ziel-Mehrwert-Servers in der Richtlinienkette; und
eine Sendeeinheit (1104), die dafür konfiguriert ist, das Benutzerpaket entsprechend an den zweiten Ziel-Mehrwert-Server zu senden, sodass der zweite Ziel-Mehrwert-Server das Benutzerpaket entsprechend verarbeitet;
die Erzeugungseinheit Folgendes umfassend:
ein erstes Bestimmungsmodul (12021), das dafür konfiguriert ist, eine erste Ziel-Hop-Zahl zu bestimmen, wenn der erste Ziel-Mehrwert-Server ein Mehrwert-Server ist, der gemäß der durch die Richtlinienkette angegebenen Reihenfolge als erster das Benutzerpaket verarbeitet, wobei die erste Ziel-Hop-Zahl eine Gesamtmenge von Mehrwert-Servern ist, die in der Richtlinienkette enthalten sind; und
ein zweites Bestimmungsmodul (12022), das dafür konfiguriert ist, von der ersten Ziel-Hop-Zahl Eins abzuziehen, um die Ziel-Verarbeitungskennung zu erzeugen;
die Erzeugungseinheit Folgendes umfassend:
ein viertes Bestimmungsmodul (14021), das dafür konfiguriert ist, eine zweite Ziel-Hop-Zahl zu bestimmen, wenn der erste Ziel-Mehrwert-Server ein Mehrwert-Server ist, der gemäß der durch die Richtlinienkette angegebenen Reihenfolge zur Verarbeitung des Benutzerpakets der erste ist, wobei die zweite Ziel-Hop-Zahl Null ist; und
ein fünftes Bestimmungsmodul (14022), das dafür konfiguriert ist, zur zweiten Ziel-Hop-Zahl Eins zu addieren, um die Ziel-Verarbeitungskennung zu erzeugen.

7. Verarbeitungsknoten nach Anspruch 6, wobei die Erzeugungseinheit Folgendes umfasst:
ein erstes Empfangsmodul (12023), das für Folgendes konfiguriert ist: wenn der erste Ziel-Mehrwert-Server kein Mehrwert-Server ist, der gemäß der von der Richtlinienkette angegebenen Reihenfolge zur Verarbeitung des Benutzerpakets der erste ist, Empfangen einer von dem ersten Ziel-Mehrwert-Server gesendeten Verarbeitungskennung; und
ein drittes Bestimmungsmodul (12024), das dafür konfiguriert ist, von der Verarbeitungskennung Eins abzuziehen, um die Ziel-Verarbeitungskennung zu erzeugen.

8. Verarbeitungsknoten nach Anspruch 6, wobei die Erzeugungseinheit Folgendes umfasst:
ein zweites Empfangsmodul (14023), das wie für Folgendes konfiguriert ist: wenn der erste Ziel-Mehrwert-Server kein Mehrwert-Server ist, der gemäß der von der Richtlinienkette angegebenen Reihenfolge zur Verarbeitung des Benutzerpakets der erste ist, Empfangen einer von dem ersten Ziel-Mehrwert-Server gesendeten Verarbeitungskennung; und
ein sechstes Bestimmungsmodul (14024), das dafür konfiguriert ist, zur Verarbeitungskennung Eins hinzufügen, um die Ziel-Verarbeitungskennung zu erzeugen.

9. Verarbeitungsknoten nach Anspruch 6, wobei die Erzeugungseinheit Folgendes umfasst:
ein siebtes Bestimmungsmodul (16021), das dafür konfiguriert ist, eine Identifikationskennung zu erhalten, die dem ersten Ziel-Mehrwert-Server entspricht, wobei unterschiedliche Mehrwert-Server unterschiedlichen Identifikationskennungen entsprechen; und
ein achtes Bestimmungsmodul (16022), das dafür konfiguriert ist, zu bestimmen, dass die Identifikationskennung die Ziel-Verarbeitungskennung ist.

10. Verarbeitungsknoten nach Anspruch 9, wobei die erste Bestimmungseinheit Folgendes umfasst:
ein elftes Bestimmungsmodul (16031), das für Folgendes konfiguriert ist: wenn bestimmt wird, dass die Ziel-Verarbeitungskennung die Identifikationskennung ist, Bestimmen des ersten Ziel-Mehrwert-Servers, der der Identifikationskennung entspricht, wobei verschiedene Mehrwert-Server verschiedenen Identifikationskennungen entsprechen; und
ein zwölftes Bestimmungsmodul (16032), das dafür konfiguriert ist, zu bestimmen, dass ein Mehrwert-Server, dessen Rang in der Richtlinienkette ein nächster Hop des ersten Ziel-Mehrwert-Servers ist, der zweite Ziel-Mehrwert-Server ist.

## Revendications

1. Procédé de commande d'acheminement de paquet utilisateur, comprenant :
la réception (301), par un nœud de traitement, d'un paquet utilisateur traité qui est envoyé par un premier serveur cible à valeur ajoutée, dans lequel le premier serveur cible à valeur ajoutée est un serveur à valeur ajoutée qui a traité le paquet utilisateur, et le nœud de traitement est connecté au premier serveur cible à valeur ajoutée ; et
la génération de manière correspondante (302), par le nœud de traitement, d'un identifiant de traitement cible selon le paquet utilisateur traité qui est envoyé par le premier serveur cible à valeur ajoutée, dans lequel l'identifiant de traitement cible est utilisé pour indiquer que le paquet utilisateur a été traité par le premier serveur cible à valeur ajoutée ;
dans lequel après la génération de manière correspondante, par le nœud de traitement, d'un identifiant de traitement cible selon le paquet utilisateur traité qui est envoyé par le premier serveur cible à valeur ajoutée, le procédé comprend en outre :
la détermination, par le nœud de traitement, d'un second serveur cible à valeur ajoutée selon une chaîne de stratégie et l'identifiant de traitement cible, dans lequel la chaîne de stratégie est utilisée pour indiquer un ordre dans lequel le paquet utilisateur est envoyé à chaque serveur à valeur ajoutée, et un classement du premier serveur cible à valeur ajoutée dans la chaîne de stratégie est supérieur à un classement du second serveur cible à valeur ajoutée dans la chaîne de stratégie ; et
l'envoi de manière correspondante, par le nœud de traitement, du paquet utilisateur au second serveur cible à valeur ajoutée, de telle sorte que le second serveur cible à valeur ajoutée traite de manière correspondante le paquet utilisateur ;
dans lequel si le premier serveur cible à valeur ajoutée est un serveur à valeur ajoutée qui est le premier selon l'ordre indiqué par la chaîne de stratégie pour traiter le paquet utilisateur, la génération de manière correspondante, par le nœud de traitement, d'un identifiant de traitement cible selon le paquet utilisateur traité qui est envoyé par le premier serveur cible à valeur ajoutée comprend :
la détermination, par le nœud de traitement, d'un premier nombre de bonds cible, dans lequel le premier nombre de bonds cible est une quantité totale de serveurs à valeur ajoutée compris dans la chaîne de stratégie ; et
la déduction, par le nœud de traitement, de l'un parmi le premier nombre de bonds cible pour générer l'identifiant de traitement cible ; ou
dans lequel si le premier serveur cible à valeur ajoutée est un serveur à valeur ajoutée qui est le premier selon l'ordre indiqué par la chaîne de stratégie pour traiter le paquet utilisateur, la génération de manière correspondante, par le nœud de traitement, d'un identifiant de traitement cible selon le paquet utilisateur traité qui est envoyé par le premier serveur cible à valeur ajoutée comprend :
la détermination, par le nœud de traitement, d'un second nombre de bonds cible, dans lequel le second nombre de bonds cible est zéro ; et
l'ajout, par le nœud de traitement, de l'un au second nombre de bonds cible pour générer l'identifiant de traitement cible.

2. Procédé de commande d'acheminement selon la revendication 1, dans lequel si le premier serveur cible à valeur ajoutée n'est pas un serveur à valeur ajoutée qui est le premier selon l'ordre indiqué par la chaîne de stratégie pour traiter le paquet utilisateur, la génération de manière correspondante, par le nœud de traitement, d'un identifiant de traitement cible selon le paquet utilisateur traité qui est envoyé par le premier serveur cible à valeur ajoutée comprend :
la réception, par le nœud de traitement, d'un identifiant de traitement envoyé par le premier serveur cible à valeur ajoutée ; et
la déduction, par le nœud de traitement, de l'un parmi l'identifiant de traitement pour générer l'identifiant de traitement cible.

3. Procédé de commande d'acheminement selon la revendication 1, dans lequel si le premier serveur cible à valeur ajoutée n'est pas un serveur à valeur ajoutée qui est le premier selon l'ordre indiqué par la chaîne de stratégie pour traiter le paquet utilisateur, la génération de manière correspondante, par le nœud de traitement, d'un identifiant de traitement cible selon le paquet utilisateur traité qui est envoyé par le premier serveur cible à valeur ajoutée comprend :
la réception, par le nœud de traitement, d'un identifiant de traitement envoyé par le premier serveur cible à valeur ajoutée ; et
l'ajout, par le nœud de traitement, de l'un à l'identifiant de traitement pour générer l'identifiant de traitement cible.

4. Procédé de commande d'acheminement selon la revendication 1, dans lequel la génération de manière correspondante, par le nœud de traitement, d'un identifiant de traitement cible selon le paquet utilisateur traité qui est envoyé par le premier serveur cible à valeur ajoutée comprend :
l'obtention, par le nœud de traitement, d'un identifiant d'identification correspondant au premier serveur cible à valeur ajoutée, dans lequel différents serveurs à valeur ajoutée correspondent à différents identifiants d'identification ; et
la détermination, par le nœud de traitement, que l'identifiant d'identification est l'identifiant de traitement cible.

5. Procédé de commande d'acheminement selon la revendication 4, dans lequel la détermination, par le nœud de traitement, d'un second serveur cible à valeur ajoutée selon une chaîne de stratégie et l'identifiant de traitement cible comprend :
si le nœud de traitement détermine que l'identifiant de traitement cible est l'identifiant d'identification, la détermination, par le nœud de traitement, du premier serveur cible à valeur ajoutée correspondant à l'identifiant d'identification, dans lequel différents serveurs à valeur ajoutée correspondent à différents identifiants d'identification ; et
la détermination, par le nœud de traitement, qu'un serveur à valeur ajoutée dont le classement dans la chaîne de stratégie est un bond suivant du premier serveur cible à valeur ajoutée est le second serveur cible à valeur ajoutée.

6. Nœud de traitement, comprenant :
une unité de réception (1001), configurée pour recevoir un paquet utilisateur traité qui est envoyé par un premier serveur cible à valeur ajoutée, dans lequel le premier serveur cible à valeur ajoutée est un serveur à valeur ajoutée qui a traité le paquet utilisateur, et le nœud de traitement est connecté au premier serveur cible à valeur ajoutée ; et
une unité de génération (1002), configurée pour générer de manière correspondante un identifiant de traitement cible selon le paquet utilisateur traité qui est envoyé par le premier serveur cible à valeur ajoutée, dans lequel l'identifiant de traitement cible est utilisé pour indiquer que le paquet utilisateur a été traité par le premier serveur cible à valeur ajoutée ;
dans lequel le nœud de traitement comprend en outre :
une première unité de détermination (1103), configurée pour déterminer un second serveur cible à valeur ajoutée selon une chaîne de stratégie et l'identifiant de traitement cible, dans lequel la chaîne de stratégie est utilisée pour indiquer un ordre dans lequel le paquet utilisateur est envoyé à chaque serveur à valeur ajoutée, et un classement du premier serveur cible à valeur ajoutée dans la chaîne de stratégie est supérieur à un classement du second serveur cible à valeur ajoutée dans la chaîne de stratégie ; et
une unité d'envoi (1104), configurée pour envoyer de manière correspondante le paquet utilisateur au second serveur cible à valeur ajoutée, de telle sorte que le second serveur cible à valeur ajoutée traite de manière correspondante le paquet utilisateur ;
dans lequel l'unité de génération comprend :
un premier module de détermination (12021), configuré pour déterminer un premier nombre de bonds cible si le premier serveur cible à valeur ajoutée est un serveur à valeur ajoutée qui est le premier selon l'ordre indiqué par la chaîne de stratégie pour traiter le paquet utilisateur, dans lequel le premier nombre de bonds cible est une quantité totale de serveurs à valeur ajoutée compris dans la chaîne de stratégie ; et
un deuxième module de détermination (12022), configuré pour déduire l'un parmi le premier nombre de bonds cible pour générer l'identifiant de traitement cible ;
dans lequel l'unité de génération comprend :
un quatrième module de détermination (14021), configuré pour déterminer un second nombre de bonds cible si le premier serveur cible à valeur ajoutée est un serveur à valeur ajoutée qui est le premier selon l'ordre indiqué par la chaîne de stratégie pour traiter le paquet utilisateur, dans lequel le second nombre de bonds cible est nul ; et
un cinquième module de détermination (14022), configuré pour en ajouter un au second nombre de bonds cible pour générer l'identifiant de traitement cible.

7. Nœud de traitement selon la revendication 6, dans lequel l'unité de génération comprend :
un premier module de réception (12023), configuré pour : si le premier serveur cible à valeur ajoutée n'est pas un serveur à valeur ajoutée qui est le premier selon l'ordre indiqué par la chaîne de stratégie pour traiter le paquet utilisateur, recevoir un identifiant de traitement envoyé par le premier serveur cible à valeur ajoutée ; et
un troisième module de détermination (12024), configuré pour en déduire un parmi l'identifiant de traitement pour générer l'identifiant de traitement cible.

8. Nœud de traitement selon la revendication 6, dans lequel l'unité de génération comprend :
un second module de réception (14023), configuré pour : si le premier serveur cible à valeur ajoutée n'est pas un serveur à valeur ajoutée qui est le premier selon l'ordre indiqué par la chaîne de stratégie pour traiter le paquet utilisateur, recevoir un identifiant de traitement envoyé par le premier serveur cible à valeur ajoutée ; et
un sixième module de détermination (14024), configuré pour en ajouter un à l'identifiant de traitement pour générer l'identifiant de traitement cible.

9. Nœud de traitement selon la revendication 6, dans lequel l'unité de génération comprend :
un septième module de détermination (16021), configuré pour obtenir un identifiant d'identification correspondant au premier serveur cible à valeur ajoutée, dans lequel différents serveurs à valeur ajoutée correspondent à différents identifiants d'identification ; et
un huitième module de détermination (16022), configuré pour déterminer que l'identifiant d'identification est l'identifiant de traitement cible.

10. Nœud de traitement selon la revendication 9, dans lequel la première unité de détermination comprend :
un onzième module de détermination (16031), configuré pour : s'il est déterminé que l'identifiant de traitement cible est l'identifiant d'identification, déterminer le premier serveur cible à valeur ajoutée correspondant à l'identifiant d'identification, dans lequel différents serveurs à valeur ajoutée correspondent à différents identifiants d'identification ; et
un douzième module de détermination (16032), configuré pour déterminer qu'un serveur à valeur ajoutée dont le classement dans la chaîne de stratégie est un bond suivant du premier serveur cible à valeur ajoutée est le second serveur cible à valeur ajoutée.
